(19) Europäisches Patentamt
European Patent Office
Office européen des brevets

(11) **EP 3 324 479 B1**

(12) **EUROPÄISCHE PATENTSCHRIFT**

(45) Veröffentlichungstag und Bekanntmachung des Hinweises auf die Patenterteilung:
**08.05.2019 Patentblatt 2019/19**

(51) Int Cl.:
**H01M 10/24** *(2006.01)*      **H01M 12/08** *(2006.01)*

(21) Anmeldenummer: **16199766.3**

(22) Anmeldetag: **21.11.2016**

(54) **ASYMMETRISCHE, SEKUNDÄRE ELEKTROCHEMISCHE ZELLE**

ASYMMETRICAL SECONDARY ELECTROCHEMICAL CELL

CELLULE ÉLECTROCHIMIQUE SECONDAIRE ASYMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.05.2018 Patentblatt 2018/21**

(73) Patentinhaber: **VARTA Microbattery GmbH 73479 Ellwangen Jagst (DE)**

(72) Erfinder:
• **Chumak, Ihor**
  **73479 Ellwangen (DE)**
• **Ensling, David**
  **73479 Ellwangen (DE)**
• **Pytlik, Edward**
  **73479 Ellwangen (DE)**
• **Schula, Claudio**
  **73479 Ellwangen (DE)**

(74) Vertreter: **Patentanwaltskanzlei Cartagena Partnerschaftsgesellschaft Klement, Eberle mbB Urbanstraße 53 70182 Stuttgart (DE)**

(56) Entgegenhaltungen:
DE-A1-102014 223 194

EP 3 324 479 B1

**Beschreibung**

Die nachfolgend beschriebene Erfindung betrifft eine asymmetrische, sekundäre elektrochemische Zelle mit einem wässrigen, alkalischen Elektrolyten. Diese weist eine negative Elektrode auf, die als Anodenspeichermaterial ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht, umfasst, sowie eine positive Elektrode, die als Kathodenspeichermaterial Nickelhydroxid- und/oder Nickeloxyhydroxid und/oder ein Derivat dieser Nickelverbindungen umfasst.

Elektrochemische Zellen umfassen stets eine positive und eine negative Elektrode. Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom - meist über einen äußeren Verbraucher - zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden Ionenstrom innerhalb der Zelle. Dieser Ionenstrom wird durch einen ionisch leitenden Elektrolyten gewährleistet. In sekundären elektrochemischen Zellen ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Seit einigen Jahren sind asymmetrische, sekundäre elektrochemische Zellen mit einem wässrigen, alkalischen Elektrolyten bekannt, bei denen die negative Elektrode als Anodenspeichermaterial ein kohlenstoffbasiertes Speichermaterial umfasst, das die Speicherung von elektrischer Ladung in der Elektrode durch Ausbildung einer elektrischen Doppelschicht (Helmholtz-Doppelschicht) ermöglicht, während die positive Elektrode als Kathodenspeichermaterial ein Material umfasst, das elektrische Energie mit Hilfe einer Redoxreaktion speichern kann. Beispiele für solche Systeme sind in der WO 2016/005529 A1 oder in der WO 2016/020136 A2 beschrieben. Als Anodenspeichermaterial eignet sich beispielsweise Aktivkohle. Als Kathodenspeichermaterial können beispielsweise Nickelhydroxid/Nickeloxyhydroxid oder Eisenoxid/Eisen eingesetzt werden. Bei diesen Zellen wird die positive Elektrode wird durch einen Faraday'schen Prozess geladen, während die negative Elektrode bei der Aufladung eine elektrische Doppelschicht an der Grenzfläche zwischen dem Anodenspeichermaterial und dem Elektrolyten ausbildet.

Problematisch ist bei Zellen dieser Bauart, dass die positive und die negative Elektrode stark unterschiedliche Selbstentladeraten aufweisen. In aller Regel ist die Selbstentladerate der negativen Elektrode sehr viel höher als die der positiven Elektrode. Dies führt zu großen Problemen, insbesondere bei Ladevorgängen. Wird eine Zelle, deren negative Elektrode einen niedrigeren Ladestand aufweist als die positive Elektrode, geladen, so wird die positive Elektrode entweder überladen oder aber der Ladevorgang muss abgebrochen werden, bevor die negative Elektrode ihre volle Kapazität erreicht hat.

Der vorliegenden Erfindung lag die Aufgabe zugrunde, elektrochemische Zellen bereitzustellen, die bezüglich dieses Problems verbesserte Eigenschaften aufweisen.

Diese Aufgabe wird gelöst durch die elektrochemische Zelle mit den Merkmalen des Anspruchs 1. Bevorzugte Ausführungsformen der erfindungsgemäßen Zelle sind in den abhängigen Ansprüchen 2 bis 10 angegeben. Der Wortlaut sämtlicher Ansprüche wird hiermit durch Bezugnahme zum Inhalt dieser Beschreibung gemacht.

Eine asymmetrische, sekundäre elektrochemische Zelle gemäß der vorliegenden Erfindung weist wie die aus dem Stand der Technik bekannten Zellen eine negative und eine mit dieser gekoppelte positive Elektrode auf, wobei, wie eingangs beschrieben, bei einer Entladung der Zelle an der negativen Elektrode Elektronen freigesetzt werden, während von der positiven Elektrode zeitgleich eine entsprechende Menge an Elektronen aufgenommen wird.

Die negative Elektrode umfasst als Anodenspeichermaterial ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht. Darüber hinaus umfasst die negative Elektrode einen Anodenstromkollektor. Die positive Elektrode umfasst als Kathodenspeichermaterial Nickelhydroxid- und/oder Nickeloxyhydroxid und/oder ein Derivat dieser Nickelverbindungen. Darüber hinaus umfasst die positive Elektrode einen Kathodenstromkollektor. Zwischen der negativen und der positiven Elektrode ist mindestens eine poröse Separatorschicht mit einer ersten Flachseite und einer zweiten Flachseite angeordnet. Sowohl die Elektroden als auch der Separator sind dabei mit einem wässrigen, alkalischen Elektrolyten getränkt. Umschlossen werden die Elektroden, der Separator und der Elektrolyt von einem Gehäuse.

Die erste Flachseite der Separatorschicht umfasst einen ersten Bereich, der in flächigem Kontakt mit dem Anodenspeichermaterial der negativen Elektrode steht, insbesondere mit diesem Material bedeckt ist. Die zweite Flachseite der Separatorschicht umfasst einen zweiten Bereich, der in flächigem Kontakt mit dem Kathodenspeichermaterial der positiven Elektrode steht, insbesondere mit diesem Material bedeckt ist. Dabei überlappen der erste Bereich und der zweite Bereich - und damit auch die negative und die positive Elektrode - in einem Überlappungsbereich zumindest teilweise.

Eine Möglichkeit, die genannten, im Zusammenhang mit den unterschiedlichen Selbstentladeraten der Elektroden von asymmetrischen Zellen entstehenden Probleme zu vermeiden oder zumindest zu verringern, besteht darin, die Kapazitäten von positiver und negativer Elektrode auf ein klar definiertes Verhältnis einzustellen.

Die erfindungsgemäße Zelle zeichnet sich dadurch aus, dass die Kapazität der negativen Elektrode $K_n$ und die Kapazität der positiven Elektrode $K_p$ in einem Verhältnis X im Bereich von 0,7 : 1 bis 5 : 1 ($K_n : K_p$) zueinander stehen.

Bevorzugt stehen die Kapazität der negativen Elektrode $K_n$ und die Kapazität der positiven Elektrode $K_p$ zueinander in einem Verhältnis X im Bereich von 1 : 1 bis 5 : 1. Innerhalb dieses Bereiches ist ein Kapazitätsverhältnis negative Elektrode / positive Elektrode im Bereich von 1 : 1 bis 2 : 1, besonders bevorzugt im Bereich von 1: 1 bis 1,1: 1, weiter bevorzugt.

Erfindungsgemäß werden also die Kapazitäten von negativer und positiver Elektrode $K_n$ und $K_p$ in einem bestimmten Verhältnis zueinander ausbalanciert.

Bevorzugte Ausführungsformen der negativen Elektrode

Die negative Elektrode umfasst in bevorzugten Ausführungsformen mindestens eines der folgenden Merkmale, in besonders bevorzugten Ausführungsformen auch mehrere der folgenden Merkmale:

- Bei dem kohlenstoffbasierten Speichermaterial handelt es sich bevorzugt um mindestens ein Material aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhrchen (CNTs).

Bei Aktivkohle handelt es sich bekanntlich um eine poröse, besonders feinkörnige Kohlenstoffmodifikation mit großer innerer Oberfläche. Erfindungsgemäß eingesetzte Aktivkohle weist bevorzugt eine BET-Oberfläche von mindestens 800 m²/g, bevorzugt von mindestens 900 m²/g (jeweils bestimmt gemäß DIN ISO 9277) auf. Alternativ oder zusätzlich weist die erfindungsgemäß verwendete Aktivkohle einen Kapazitätswert von mindestens 60 F/g (bestimmt gemäß DIN IEC 62391) auf.

Aktivkohlefasern können aus Aktivkohle gewonnen werden. Sie sind ebenfalls porös, weisen eine große innere Oberfläche auf und haben meist einen typischen Durchmesser von etwa 10 $\mu$m. Neben einer hohen spezifischen Kapazität weisen Aktivkohlefasern eine außerordentlich gute Leitfähigkeit entlang der Faserachse auf.

Kohlenstoff-Aerogel ist ein synthetisches, hochporöses Material aus einem organischen Gel, in dem die flüssige Komponente des Gels durch Pyrolyse mit einem Gas ersetzt wurde. Kohlenstoff-Aerogele können beispielsweise durch Pyrolyse von Resorcin-Formaldehyd hergestellt werden. Sie weisen eine bessere elektrische Leitfähigkeit auf als Aktivkohle.

Carbid-abgeleitete Kohlenstoffe bestehen aus einer Anzahl von Stoffen, die aus Carbiden wie zum Beispiel Siliciumcarbid und Titancarbid durch thermische Zersetzung oder durch chemische Halogenierung in einen reinen Kohlenstoff umgewandelt wurden. Elektroden aus Carbidabgeleiteten Kohlenstoffen besitzen große Oberflächen mit maßgeschneiderten Porengrößen. Im Allgemeinen haben Elektroden aus CDC eine höhere Energiedichte als Elektroden aus Aktivkohle.

Bei Graphen handelt es sich um eine Kohlenstoffmodifikation mit zweidimensionaler Struktur. Eine Vielzahl von verketteten Benzol-Ringen bildet ein bienenwabenförmiges Muster aus, in dem jedes Kohlenstoffatom im Winkel von 120° von drei weiteren Kohlenstoffatomen umgeben ist und wobei alle Kohlenstoffatome sp2-hybridisiert sind. Graphen bietet die theoretisch größte mit Kohlenstoff erreichbare Oberfläche pro Gewichtseinheit und ist daher aktuell Gegenstand intensiver Untersuchungen im Zusammenhang mit der Entwicklung von Superkondensatoren.

Bei Kohlenstoffnanoröhrchen handelt es sich um zu zylindrischen Nanoröhren umgeformte Graphenschichten. Es gibt einwandige Nanoröhren und mehrwandige Nanoröhren, bei denen mehrere einwandige Nanoröhren koaxial ineinander verschachtelt angeordnet sind. Allgemein besitzen CNT-basierte Elektroden eine kleinere Elektrodenoberfläche als Elektroden auf Basis von Aktivkohle. Ungeachtet dessen lassen sich mit CNTs grundsätzlich höhere Kapazitäten erzielen als mit Aktivkohle-Elektroden.

Selbstverständlich können die genannten Kohlenstoff-basierten Materialien auch in Kombination miteinander verwendet werden. Hierbei ist jedes Mischungsverhältnis denkbar.

- Die negative Elektrode enthält als Anodenspeichermaterial neben dem kohlenstoffbasierten Speichermaterial ein zusätzliches Speichermaterial, das elektrische Energie mit Hilfe von Redoxreaktionen speichern kann.

Bei diesem zusätzlichen Speichermaterial handelt es sich bevorzugt um ein Material, das in einem wässrigen alkalischen Elektrolyten reversibel oxidiert und reduziert werden kann. Ein besonders bevorzugtes Beispiel hierfür ist das Redoxpaar Eisen/Eisenoxid. Weiterhin besonders gut geeignet sind Wasserstoffspeicherlegierungen. In alkalischer Lösung können diese Wasserstoff in hydridischer Form binden und auch wieder freisetzen. Geeignete Wasserstoffspeicherlegierungen sind beispielsweise $AB_2$-Legierungen, $AB_5$-Legierungen, $A_2B_7$-Legierungen oder $AB_3$-Legierungen. Auch Mischmetall ist als zusätzliches Speichermaterial geeignet.

Durch den Zusatz des zusätzlichen Speichermaterials können die unterschiedlichen Selbstentladeraten von positiver und negativer Elektrode aneinander angeglichen werden. Das stabile Potenzial des Speichermaterials stabilisiert hierbei das Selbstentladeverhalten der negativen Elektrode.

Die genannten bevorzugten Kapazitätsverhältnisse X im Bereich von 1 : 1 bis 2 : 1 sind insbesondere dann realisierbar, wenn die negative Elektrode das zusätzliche Speichermaterial aufweist. Grundsätzlich gilt, dass sich das Kapazitätsverhältnis negative Elektrode zu positive Elektrode mit dem zusätzlichen Speichermaterial sehr viel leichter in Richtung 1 : 1 oder sogar 0,7 : 1 absenken lässt als ohne das zusätzliche Speichermaterial.

- Das zusätzliche Speichermaterial ist in der negativen Elektrode in einem Anteil von 1,0 bis 3 Gew.-% enthalten.

Diese Prozentangaben beziehen sich auf das Gewicht der negativen Elektrode insgesamt, also auf das Gewicht der Elektrode einschließlich dem Anodenspeichermaterial, dem Anodenstromkollektor sowie gegebenenfalls enthaltener fester Zusätze wie einem Elektrodenbinder (siehe hierzu unten). Nicht miteinbezogen wird allerdings der Elektrolyt, mit dem die Elektrode getränkt ist. Die genannten Prozentangaben beziehen sich auf die Elektrode im getrockneten (Anteil Wasser < 2 Gew.-%) Zustand, bevor sie mit dem Elektrolyten getränkt wird. Im Folgenden wird bei diesem Zustand einer Elektrode auch vom Trockengewicht dieser Elektrode gesprochen.

Es sei an dieser Stelle angemerkt, dass alle im Folgenden angegebenen Prozentangaben, die Anteile in der negativen Elektrode spezifizieren, gleichermaßen auf das Gewicht der negativen Elektrode insgesamt, wie es hier definiert ist, bezogen sind.

- Das Anodenspeichermaterial ist in der negativen Elektrode bevorzugt in einem Anteil im Bereich von 40 bis 95 Gew.-% enthalten.

- Die negative Elektrode enthält in bevorzugten Ausführungsformen einen Elektrodenbinder. Hierbei kann es sich beispielsweise um Polytetrafluorethylen (PTFE) handeln. Alternativ können als Elektrodenbinder beispielsweise Carboxymethylzellulose (CMC), Methylhydroxypropylzellulose (HPMC), Styrol-Butadien-Rubber (SBR), Polyvinylalkohol (PVA) oder polyacrylatbasierte Binder verwendet werden.

Der Elektrodenbinder ist in der negativen Elektrode bevorzugt in einem Anteil von 0,1 bis 30 Gew.-% enthalten. In einigen Ausführungsformen einer erfindungsgemäßen Zelle ist ein innerhalb dieses Bereiches liegender Anteil von 0,1 bis 5 Gew.-% weiter bevorzugt.

- Die negative Elektrode kann in bevorzugten Ausführungsformen als Tablette vorliegen. Sie kann hierbei scheibenförmig oder auch prismatisch, beispielsweise mit hexagonaler Geometrie, ausgebildet sein. Die Tablette kann beispielsweise unmittelbar aus einem Pressvorgang erhalten oder aber auch durch einen Stanzvorgang gebildet werden. Die Tablette weist in bevorzugten Ausführungsformen eine Dicke im Bereich von 2 mm bis 5 mm, bevorzugt von 2 mm bis 4 mm, auf.

Alternativ kann die negative Elektrode als dünne Schichtelektrode, insbesondere auch streifen- oder bandförmig, vorliegen. Streifen- oder bandförmig liegt die Elektrode insbesondere dann vor, wenn ihre Länge ihre Breite um den Faktor 3 oder mehr überschreitet. Als dünn wird hierbei eine Elektrode insbesondere dann bezeichnet, wenn ihre Dicke nicht mehr als 1,5 mm, besonders bevorzugt nicht mehr als 1 mm, beträgt.

Wenn die negative Elektrode als dünne Schichtelektrode vorliegt, weist sie in bevorzugten Ausführungsformen eine kreisrunde Geometrie oder eine rechteckige Geometrie oder eine streifen- oder bandförmige Elektrodengeometrie auf.

- Der Anodenstromkollektor ist in bevorzugten Ausführungsformen ein Stromableiter, der eine dreidimensionale Leitmatrix bildet, in die das Anodenspeichermaterial eingebettet ist. Insbesondere ist der Anodenstromkollektor ein elektrisch leitender Schaum, ein elektrisch leitendes Vlies, ein elektrisch leitender Filz oder ein elektrisch leitendes Gewebe. Es besteht bevorzugt aus einem Metall, beispielsweise aus Nickel. Besonders bevorzugt ist der Anodenstromkollektor ein Nickelschaum.

Alternativ kann der Anodenstromkollektor auch ein Gitter oder Netz sein, das die negative Elektrode ummantelt.

Zu beachten ist, dass der Anodenstromkollektor nicht zwingend vollständig mit Anodenspeichermaterial bedeckt sein muss. Es gibt beispielsweise Ausgestaltungen negativer Elektroden, bei denen ein streifenförmiger Anodenstromkollektor mittig mit Anodenspeichermaterial bedeckt ist, längsseitig aber unbedeckte Randbereiche aufweist.

- Der Anodenstromkollektor trägt bevorzugt mit einem Anteil im Bereich von 5 bis 60 Gew.-% zum Gesamtgewicht der negativen Elektrode bei. Die obere Grenze dieses Bereiches wird in der Regel allerdings nur dann erreicht, wenn das spezifische Gewicht der verwendeten Anodenspeichermaterialien sehr gering ist.

- Die negative Elektrode weist bevorzugt eine spezifische Kapazität K1 im Bereich von 1 bis 150 mAh/g auf. In einigen Ausführungsformen einer erfindungsgemäßen Zelle ist eine innerhalb dieses Bereiches liegende Kapazität K1 im Bereich von 10 bis 100 mAh/g, besonders bevorzugt im Bereich von 20 bis 60 mAh/g, weiter bevorzugt.

Die angegebenen Kapazitätswerte beziehen sich hierbei auf das Trockengewicht der Elektrode, wie es oben definiert wurde, also auf das Gewicht der Elektrode insgesamt, einschließlich dem Anodenspeichermaterial, dem Anodenstromkollektor sowie gegebenenfalls enthaltener fester Zusätze, aber ohne Berücksichtigung des Elektrolyten.

Bevorzugte Ausführungsformen der positiven Elektrode

Die positive Elektrode umfasst in bevorzugten Ausführungsformen mindestens eines der folgenden Merkmale, in besonders bevorzugten Ausführungsformen mehrere der folgenden Merkmale:

- Bei dem Kathodenspeichermaterial handelt es sich um Nickelhydroxid- und/oder Nickeloxyhydroxid und/oder ein Derivat dieser Nickelverbindungen.

Nickelhydroxid existiert in zwei kristallinen Formen, nämlich in einer alpha-Form ($\alpha$-Ni(OH)$_2$) und in einer beta-Form ($\beta$-Ni(OH)$_2$). Im Rahmen der vorliegenden Erfindung können $\alpha$- oder $\beta$-Ni(OH)$_2$ eingesetzt werden. Es können weiterhin auch $\alpha$- und $\beta$-Mischphasen verwendet werden.

Nickeloxyhydroxid (NiOOH) kann während des Betriebs der erfindungsgemäßen Zelle aus Ni(OH)$_2$ gebildet werden. Mit besonderem Vorteil kann NiOOH der Kathode allerdings auch initial - sowohl an Stelle des Ni(OH)$_2$ als auch zusätzlich zu diesem - zugesetzt werden, also vor der ersten Inbetriebnahme der erfindungsgemäßen Zelle. Die Zelle liegt in diesem Fall unmittelbar nach Ihrer Fertigung bereits geladen oder zumindest teilgeladen vor.

Bei dem Derivat handelt es sich insbesondere um ein Derivat der Formel Ni$_{1-x}$Mx(OH)$_2$, wobei M mindestens ein substituiertes Metallatom ist, vorzugsweise aus der Gruppe mit Mg, Al, Ca, Co, Cr, Sn, Cu, Zn, Cd, Mn, Fe, Y, und Yb. Im Fall von $\alpha$-Nickelhydroxid sind als Substituenten Mg, Al, Ca, Co, Cr, Sn, Cu, Zn und Cd besonders bevorzugt. Im Fall von $\beta$-Nickelhydroxid sind als Substituenten Al, Mn, Fe, Co, Cu, Zn, Y, und Yb besonders bevorzugt.

$\alpha$-Ni(OH)$_2$ liegt als metastabile Phase vor. Bei Lagerung in einer wässrigen alkalischen Lösung wandelt sie sich in der Regel schnell in die $\beta$-Form um. Stabilisieren lässt sich die metastabile Phase, indem man einen Teil der Nickelatome durch Kobalt ersetzt. In einer besonders bevorzugten Ausführungsform wird als Kathodenspeichermaterial Ni$_{1-x}$Mx(OH)$_2$ mit M = Co und mit x = 0,01 bis 0,5 verwendet.

Des Weiteren kann auch beschichtetes Ni(OH)$_2$ eingesetzt werden. Ein Beispiel hierfür sind Partikel aus Ni(OH)$_2$, deren Oberfläche zur Verbesserung der Leitfähigkeit mit Co und/oder mit CoOOH beschichtet ist.

Insbesondere $\alpha$-Ni(OH)$_2$ kann neben Hydroxid-Ionen in eingelagerter Form weitere Anionen enthalten, beispielsweise aus der Gruppe mit Nitrat-Ionen, Chlorid-Ionen, Sulfat-Ionen, Carbonat-Ionen, Cyanat-Ionen, Acetat-Ionen, Succinat-Ionen, Glutarat-Ionen und Adipat-Ionen. Wegen einer höheren Packungsdichte ist der Einbau von Fremdanionen in $\beta$-Ni(OH)$_2$ deutlich seltener.

Besonders bevorzugt kommt in einer erfindungsgemäßen Zelle als Kathodenspeichermaterial sphärisches $\beta$-Ni(OH)$_2$ mit einem D50-Wert im Bereich von 8 - 15 $\mu$m zum Einsatz. In einer Weiterbildung können ein Teil der Nickelatome in diesem $\beta$-Ni(OH)$_2$ durch Co- und/oder Zn-Atome substituiert sein.

- Die positive Elektrode enthält neben dem Kathodenspeichermaterial mindestens einen Leitfähigkeitsverbesserer, bevorzugt aus der Gruppe mit Nickel, Kobalt, Kobaltoxid, Kobaltcarbonat, Kobalthydroxid, Graphit, Hard-Carbon, Soft-Carbon und Ruß.

Mit besonderem Vorteil bewirkt der mindestens eine Leitfähigkeitsverbesserer in der positiven Elektrode eine Erhöhung ihrer Selbstentladerate. Der Zusatz des Leitfähigkeitsverbesserers kann somit zum Ausgleich der unterschiedlichen Selbstentladeraten von positiver und negativer Elektrode dienen. Dies gilt insbesondere, wenn gleichzeitig in der negativen Elektrode das oben beschriebene zusätzliche Speichermaterial, das elektrische Energie mit Hilfe von Redoxreaktionen speichern kann, enthalten ist.

- Besonders bevorzugt ist der mindestens eine Leitfähigkeitsverbesserer in der positiven Elektrode in einem Anteil von 0,1 bis 25 Gew.-% enthalten.

Diese Prozentangaben beziehen sich auf das Gewicht der positiven Elektrode insgesamt, also auf das Gewicht der Elektrode einschließlich dem Kathodenspeichermaterial, dem Kathodenstromkollektor sowie gegebenenfalls enthaltener fester Zusätze wie einem Elektrodenbinder (siehe hierzu unten). Nicht miteinbezogen wird allerdings der Elektrolyt, mit dem die Elektrode getränkt ist. Die genannten Prozentangaben beziehen sich auf die Elektrode im getrockneten (Anteil Wasser < 2 Gew.-%) Zustand, bevor sie mit dem Elektrolyten getränkt wird. Im Folgenden wird bei diesem Zustand einer Elektrode auch vom Trockengewicht dieser Elektrode gesprochen.

Es sei an dieser Stelle angemerkt, dass alle im Folgenden angegebenen Prozentangaben, die Anteile in der positiven Elektrode spezifizieren, gleichermaßen auf das Gewicht der negativen Elektrode insgesamt, wie es hier definiert ist, bezogen sind.

- Das Kathodenspeichermaterial ist in der positiven Elektrode bevorzugt in einem Gewichtsanteil im Bereich von 10 bis 95 Gew.-% enthalten.

- Die positive Elektrode enthält in bevorzugten Ausführungsformen einen Elektrodenbinder. Hierbei kann es sich beispielsweise um Carboxymethylzellulose (CMC) oder um ein CMC-Derivat handeln. Alternativ können als Elektrodenbinder beispielsweise Methylhydroxypropylzellulose (HPMC), Styrol-Butadien-Rubber (SBR), Polyvinylalkohol (PVA) oder polyacrylatbasierte Binder verwendet werden.

Der Elektrodenbinder ist in der positiven Elektrode bevorzugt in einem Anteil von 0,1 bis 8 Gew.-% enthalten.

- In bevorzugten Ausführungsformen liegt die positive Elektrode als dünne Schichtelektrode, insbesondere auch streifen- oder bandförmig, vor. Streifen- oder bandförmig liegt die Elektrode insbesondere dann vor, wenn ihre Länge ihre Breite um den Faktor 3 oder mehr überschreitet. Als dünn wird hierbei eine Elektrode insbesondere dann bezeichnet, wenn ihre Dicke nicht mehr als 1,5 mm, besonders bevorzugt nicht mehr als 1 mm, beträgt.

Wenn die negative Elektrode als dünne Schichtelektrode vorliegt, weist sie in bevorzugten Ausführungsformen eine kreisrunde Geometrie oder eine rechteckige Geometrie oder eine streifen- oder bandförmige Elektrodengeometrie (streifen- oder bandförmig ist die Elektrode insbesondere dann, wenn die Länge der Elektrode ihre Breite um den Faktor 3 oder mehr überschreitet) auf.

- Der Kathodenstromkollektor ist in bevorzugten Ausführungsformen ein Stromableiter, der eine dreidimensionale Leitmatrix bildet, in die das Kathodenspeichermaterial eingebettet ist, insbesondere ein elektrisch leitender Schaum, ein elektrisch leitendes Vlies, ein elektrisch leitender Filz oder ein elektrisch leitendes Gewebe.

Alternativ kann der Kathodenstromkollektor auch eine elektrisch leitende Folie, ein elektrisch leitendes Netz oder ein elektrisch leitendes Gitter, beispielsweise ein Streckmetallgitter, sein.

Zu beachten ist, dass der Kathodenstromkollektor nicht zwingend vollständig mit Kathodenspeichermaterial bedeckt sein muss. Es gibt beispielsweise Ausgestaltungen positiver Elektroden, bei denen ein streifenförmiger Kathodenstromkollektor mittig mit Kathodenspeichermaterial bedeckt ist, längsseitig aber unbedeckte Randbereiche aufweist.

- Der Kathodenstromkollektor ist in der positiven Elektrode in einem Gewichtsanteil im Bereich von 5 bis 60 Gew.-% enthalten. Auch hier wird die obere Grenze dieses Bereiches in der Regel nur dann erreicht, wenn das spezifische Gewicht der verwendeten Anodenspeichermaterialien sehr gering ist.

- Die positive Elektrode weist eine spezifische Kapazität K2 im Bereich von 40 bis 310 mAh/g auf, bevorzugt im Bereich von 50 bis 240 mAh/g, besonders bevorzugt im Bereich 60 bis 200 mAh/g.

Die angegebenen Kapazitätswerte beziehen sich hierbei auf das Trockengewicht der Elektrode, wie es oben definiert wurde, also auf das Gewicht der Elektrode insgesamt, einschließlich dem Kathodenspeichermaterial, dem Kathodenstromkollektor sowie gegebenenfalls enthaltener fester Zusätze, aber ohne Berücksichtigung des Elektrolyten

### Bevorzugte Ausführungsformen der Separatorschicht

Als Separatorschicht kommt erfindungsgemäß bevorzugt ein poröses Flächengebilde zum Einsatz, das durchlässig für Ionen ist, die zwischen der positiven und der negativen Elektrode hin und her wandern, gleichzeitig die Elektroden jedoch elektrisch voneinander isoliert. Als Flächengebilde kommt beispielsweise eine poröse Folie, beispielsweise aus einem Polyolefin oder aus einem Polyester, in Frage. In vielen bevorzugten Ausführungsformen ist das Flächengebilde ein Vlies. Dieses kann ebenfalls beispielsweise aus einem Polyolefin oder einem Polyester gefertigt sein.

### Bevorzugte Ausführungsformen des Elektrolyten

Bei dem wässrigen alkalischen Elektrolyten handelt es sich bevorzugt um eine wässrige Lösung mindestens eines Alkali- und/oder Erdalkalihydroxids. Besonders bevorzugt enthält der Elektrolyt mindestens ein Hydroxid aus der Gruppe mit Natriumhydroxid, Kaliumhydroxid und Lithiumhydroxid. Das mindestens eine Hydroxid ist in dem Elektrolyten bevorzugt in einer Konzentration von 0,1 mol/l bis 10 mol/l enthalten.

### Bevorzugte Ausführungsformen des Gehäuses

Das Gehäuse einer erfindungsgemäßen Zelle ist bevorzugt sowohl flüssigkeits- als auch gasdicht ausgebildet. Unter einem gasdichten Verschluss soll hierbei verstanden werden, dass die erfindungsgemäße Zelle keine Mittel zu einer gezielten Entlüftung wie beispielsweise ein Überdruckventil umfasst. Allerdings kann aus Sicherheitsgründen eine Berstmembran vorgesehen sein, die bei Überschreiten eines Druckschwellenwertes irreversibel zerstört wird.

Das Gehäuse kann beispielsweise als Knopfzellengehäuse ausgebildet sein, beispielsweise als Gehäuse, wie es in der EP 1 011163 A1 dargestellt ist. Alternativ können erfindungsgemäße Zellen aber auch als Flachzellen ausgebildet sein, wie sie beispielsweise in der EP 1 391 947 A1 beschrieben sind. In diesem Fall wird ihr Gehäuse bevorzugt aus dünnen Metallfolien gebildet, die über eine Siegelschicht miteinander verbunden sind.

In einigen bevorzugten Ausführungsformen, die unten noch näher beschrieben werden, liegen die positive und die negative Elektrode als Teil eines bandförmigen Elektroden-Separator-Verbundes vor, der gegebenenfalls als spiralförmiger Wickel vorliegt. In diesem Fall kann das Gehäuse in bevorzugten Ausführungsformen als Knopfzellengehäuse ausgebildet sein, beispielsweise als Knopfzellengehäuse, wie es beispielsweise in Fig. 4 der WO 2010/089152 A1 dargestellt ist. Alternativ kann es insbesondere in diesem Fall aber auch als zylindrisches Rundzellengehäuse ausgebildet sein.

Besonders bevorzugt handelt es sich bei dem Gehäuse der Zellen um ein metallisches Gehäuse, beispielsweise um ein Gehäuse aus Edelstahl oder aus einem vernickelten Stahl. Dies gilt insbesondere, wenn es sich bei dem Gehäuse um ein Knopfzellengehäuse handelt oder wenn das Gehäuse ein zylindrisches Rundzellengehäuse ist.

Wenn es sich bei dem Gehäuse um ein Knopfzellengehäuse handelt, so ist dieses erfindungsgemäß besonders bevorzugt, wenn es ein metallisches Netz oder Gitter aufweist, das an einer seiner Innenseiten angeordnet ist, insbesondere flach an einer seiner Innenseiten anliegt. Hierdurch lässt sich die elektrische Kontaktierung der Elektroden mit den entsprechenden Teilen des Knopfzellengehäuses signifikant verbessern.

In bevorzugten Ausführungsformen umfasst ein erfindungsgemäß verwendetes Knopfzellengehäuse ein mit der positiven Elektrode elektrisch verbundenes positives Gehäusehalbteil und ein mit der negativen Elektrode elektrisch verbundenes negatives Gehäusehalbteil, wobei eine Innenseite des negativen Gehäusehalbteils mit einem metallischen Netz oder Gitter, beispielsweise einem Streckmetallgitter, abgedeckt ist. Das metallisches Netz oder Gitter kann mit dem negativen Gehäusehalbteil durch Verschweißung verbunden sein.

Balancierung der positiven und der negativen Elektrode

Um die positive und die negative Elektrode einer erfindungsgemäßen Zelle innerhalb der erfindungsgemäßen Kapazitätsparameter zu balancieren, können ein oder mehrere Parameter der Elektroden gleichzeitig aufeinander abgestimmt werden. Es handelt sich hierbei insbesondere um die spezifischen Kapazitäten K1 und K2, eine Fläche F1, über die sich der erste Bereich (in dem das Anodenspeichermaterial der negativen Elektrode in flächigem Kontakt mit der ersten Flachseite der Separatorschicht steht) erstreckt, eine Fläche F2, über die sich der zweite Bereich (in dem das Kathodenspeichermaterial der positiven Elektrode in flächigem Kontakt mit der zweiten Flachseite der Separatorschicht steht) erstreckt, eine mittlere Dicke D1 der negativen Elektrode und eine mittlere Dicke D2 der positiven Elektrode. Mathematisch ausgedrückt besteht der folgende Zusammenhang zwischen diesen Parametern und dem Verhältnis X:

$$X = K1 * D1 * F1 / K2 * D2 * F2$$

Hieraus geht hervor, dass sich die Faktoren K1, D1 und F1 jeweils proportional zu den Faktoren K2, D2 und F2 verhalten. Das Produkt aus K1 und D1 und F1 ist hierbei $K_n$. Das Produkt aus K2 und D2 und F2 ist hierbei $K_p$. Das Kapazitätsverhältnis X lässt sich somit über die spezifischen Kapazitäten K1 und K2, die Dicken D1 und D2 und die Flächen F1 und F2 beeinflussen.

Besonders bevorzugt weist die negative Elektrode eine mittlere Dicke D1 im Bereich von 30 $\mu$m bis 800 $\mu$m auf. Diese Angabe bezieht sich auf die Dicke der Elektrode in dem ersten Bereich, also in dem Bereich der ersten Flachseite der Separatorschicht, der in flächigem Kontakt mit dem Anodenspeichermaterial der negativen Elektrode steht.

Die positive Elektrode weist bevorzugt eine mittlere Dicke D2 im Bereich von 30 $\mu$m bis 500 $\mu$m auf. Diese Angabe bezieht sich auf die Dicke der Elektrode in dem zweiten Bereich, also in dem Bereich der zweiten Flachseite der Separatorschicht, der in flächigem Kontakt mit dem Kathodenspeichermaterial der positiven Elektrode steht.

Bei kreisförmiger Elektrodengeometrie erfolgt die Bestimmung der mittleren Dicke einer Elektrode insbesondere mit Hilfe zweier Geraden, die in orthogonaler Ausrichtung zueinander durch den Mittelpunkt der kreisförmigen Elektrode gelegt werden. Die Dicke der Elektrode wird im Mittelpunkt sowie in zwei Punkten auf jeder der Geraden, nämlich jeweils auf halber Strecke zwischen dem Mittelpunkt und dem Elektrodenrand, bestimmt. Die mittlere Dicke der Elektrode entspricht dem Mittelwert der erhaltenen fünf Messergebnisse.

Bei rechteckiger Elektrodengeometrie erfolgt die Bestimmung der mittleren Dicke einer Elektrode insbesondere mit Hilfe zweier Geraden, die in diagonaler Ausrichtung durch den Mittelpunkt sowie durch die vier Eckpunkte der rechteckigen Elektrode gelegt werden. Die Dicke der Elektrode wird im Mittelpunkt sowie in zwei Punkten auf jeder der Geraden, nämlich jeweils auf halber Strecke zwischen dem Mittelpunkt und einem der vier Eckpunkte, bestimmt. Die mittlere Dicke der Elektrode entspricht dem Mittelwert der erhaltenen fünf Messergebnisse.

Bei streifen- oder bandförmiger Elektrodengeometrie (wenn die Länge der Elektrode ihre Breite um den Faktor 3 oder mehr überschreitet) werden zur Bestimmung der mittleren Dicke einer Elektrode insbesondere zwei Geraden parallel zueinander sowie parallel zu den Längsrändern der Elektrode auf die Elektrode gelegt. Die Abstände zwischen den Geraden und den Längsrändern sowie der Abstand zwischen den Geraden sind dabei identisch. Die Elektrode wird anschließend in 10 gleich große Längsabschnitte unterteilt. Die Dicke der Elektrode wird in jedem der Längsabschnitte in einem Punkt auf jeder der beiden Geraden bestimmt. Die mittlere Dicke der Elektrode entspricht dem Mittelwert der erhaltenen zwanzig Messergebnisse.

Es ist sowohl für die positive als auch für die negative Elektrode bevorzugt, dass sie jeweils eine im Wesentlichen konstante Dicke in dem ersten und in dem zweiten Bereich aufweisen. Unter "im Wesentlichen konstant" soll hierbei verstanden werden, dass die Dicke der negativen und der positiven Elektrode bevorzugt an keiner Stelle mehr als 25 %, bevorzugt weniger als 15 %, von der mittleren Dicke der jeweiligen Elektrode abweicht.

Es ist weiterhin bevorzugt, dass die mittlere Dicke der negativen Elektrode in einem Verhältnis im Bereich von 0,7 : 1 bis 25 : 1 zur mittleren Dicke der positiven Elektrode steht. Innerhalb dieses Bereiches ist ein Dickenverhältnis "mittlere Dicke der negativen Elektrode / zur mittleren Dicke der positiven Elektrode" im Bereich von 3 : 1 bis 15 : 1 weiter bevorzugt.

In bevorzugten Ausführungsformen überlappen der erste und der zweite Bereich (und damit auch die negative und die positive Elektrode) vollständig miteinander. Dies bedeutet nicht zwingend, dass der erste und der zweite Bereich bei einer vollständigen Überlappung auch gleich groß sind. Es bedeutet lediglich, dass der erste und der zweite Bereich nicht derart zueinander angeordnet sind, dass sowohl ein Teil des ersten Bereichs nicht mit dem zweiten Bereich als auch ein Teil des zweiten Bereichs nicht mit dem ersten Bereich überlappt. Wenn also der erste Bereich kleiner als der zweite Bereich ist, so weist er gemäß dieser Bedingung keinen Teil auf, der nicht mit dem zweiten Bereich überlappt, wohingegen ein Teil des zweiten Bereichs nicht mit dem ersten Bereich überlappen kann. Ist der zweite Bereich kleiner als der erste Bereich, so weist er gemäß dieser Bedingung keinen Teil auf, der nicht mit dem ersten Bereich überlappt, wohingegen ein Teil des ersten Bereichs nicht mit dem zweiten Bereich überlappen kann. Sind der erste und der zweite Bereich gleich groß, so weist keiner der Bereich einen Teil auf, der nicht mit dem jeweils anderen Bereich überlappt.

In besonders bevorzugten Ausführungsformen erstrecken sich der erste Bereich über eine Fläche F1 und der zweite Bereich über eine Fläche F2, wobei F1 und F2 in einem Verhältnis im Bereich von 0,8 : 1 bis 10 : 1 zueinander stehen. In dieser Ausführungsform belegt die negative Elektrode eine bis um den Faktor 10 größere Fläche auf der Separatorschicht als die positive Elektrode.

In weiteren bevorzugten Ausführungsformen stehen F1 und F2 in einem Verhältnis im Bereich von 1 : 1 bis 1,5 : 1 oder im Bereich von 0,8 : 1 bis 1 : 1 zueinander.

Der Bereich von 1:1 bis 1,5:1 ist besonders bevorzugt, wenn die positive und die negative Elektrode rechteckig oder streifen- oder bandförmig ausgebildet sind. Wenn die Elektroden hingegen kreisförmige Geometrie aufweisen, wie es beispielsweise bei Knopfzellen der Fall ist, die tabletten- oder scheibenförmige Elektroden enthalten, so ist in der Regel der Bereich von 0,8:1 bis 1:1 bevorzugt. In diesem Fall ist es nämlich nicht unüblich, dass die positive Elektrode eine größere Fläche einnimmt als die negative Elektrode.

In einer besonders bevorzugten Ausführungsform der erfindungsgemäßen Zelle liegt die negative Elektrode in Form von zwei separaten Schichten vor und die positive Elektrode liegt in Form von einer Schicht vor, wobei die Schichten und der mindestens eine Separator in der Sequenz negative Elektrode / Separator / positive Elektrode / Separator / negative Elektrode angeordnet sind. Für die Berechnung des Verhältnisses "mittlere Dicke negative Elektrode (D1) zu mittlere Dicke positive Elektrode (D2)" addiert man die mittleren Dicken der zwei separaten Schichten (D1a und D1b) zu D1 auf. Mathematisch ausgedrückt: D1a + D1b = D1.

In einer möglichen weiteren Ausführungsform liegen die negative Elektrode und die positive Elektrode jeweils in Form eines Elektrodenbandes vor und die mindestens eine Separatorschicht liegt in Form mindestens eines Separatorbandes vor. Bevorzugt sind die bandförmige positive und die bandförmige negative Elektrode und das mindestens eine Separatorband zu einem bandförmigen Elektroden-Separator-Verbund verarbeitet, in dem das mindestens eine Separatorband zwischen der positiven und der negativen Elektrode angeordnet ist. Ganz besonders bevorzugt liegt der Elektroden-Separator-Verbund als spiralförmiger Wickel vor.

Zur Balancierung der Elektroden innerhalb eines solchen Wickels kann es vorgesehen sein, dass die bandförmige negative Elektrode länger ist als die bandförmige positive Elektrode und diese innerhalb des Elektroden-Separator-Verbunds an mindestens einem Ende überlappt.

Da die negative Elektrode eine hohe elektrische Leitfähigkeit aufweist und Elektrizität in der negativen Elektrode primär in Form einer elektrischen Doppelschicht gespeichert ist, kann die negative Elektrode problemlos Bereiche aufweisen, die nicht mit der positiven Elektrode innerhalb des Wickels überlappen. Es ist also möglich, Wickel zu bauen, bei denen die positive und die negative Elektrode im Wesentlichen die gleiche Dicke aufweisen und die Balancierung der positiven und der negativen Elektrode ausschließlich über die Länge der Elektroden vorgenommen wird. Beispielsweise kann der Wickel eine oder mehrere außenliegende Windungen aufweisen, die ausschließlich aus einem Verbund aus negativer Elektrode und Separator gebildet werden. Zur Herstellung eines solchen Wickels kombiniert man vergleichsweise lange streifenförmige negative Elektroden mit vergleichsweise kurzen streifenförmigen positiven Elektroden. An mindestens einem Ender des Wickels kommt es dann zu einer Überlappung der negativen Elektrode.

Unter Berücksichtigung der genannten Parameter lassen sich die Kapazitäten der Elektroden und damit auch Kapazitätsverhältnisse zwischen negativer und positiver Elektrode berechnen und gezielt einstellen. In der Praxis kann es aber auch Abweichungen von errechneten Werten geben, was beispielsweise auf die Faktoren K1 und K2 zurückzuführen sein kann. Die Werte der spezifischen Kapazitäten K1 und K2 sind von mehreren Faktoren abhängig und können daher innerhalb der oben definierten bevorzugten Bereiche schwanken. Einfluss nehmen auf K1 und K2 beispielsweise die folgenden Faktoren:

- Die Qualität des Anoden- und/oder Kathodenspeichermaterials

- Der Anteil an "nicht-aktiven Komponenten" in der Elektrode, also beispielsweise der Gewichtsanteil des Elektrodenbinders oder das Gewicht des Stromkollektors

- Der Grad der Verdichtung der Elektrode

In der Praxis werden daher theoretisch ermittelbare Kapazitäten und Kapazitätsverhältnisse oft durch praktische Messungen überprüft.

Allgemeines Vorgehen zur Bestimmung von $K_n$ und $K_p$ / K1 und K2

Die Kapazitäten der negativen und der positiven Elektroden $K_n$ und $K_p$ werden in der Regel separat voneinander bestimmt.

Es ist bevorzugt, dass die negative und die positive Elektrode zur separaten Bestimmung der Kapazitäten gegen überdimensionierte Referenzelektroden geschaltet, jeweils formiert und anschließend mehreren Lade- und Entladezyklen unterworfen werden, bis die Elektroden ein stabiles Lade- und Entladeverhalten zeigen. Dann werden die Kapazitäten $K_p$ und $K_n$ durch Messung des Entladestroms über die allgemeine Formel $K_P = I_{ENTLADESTROM} \times t_{ENTLADEZEIT}$ [mAh] ermittelt. Bei der positiven Elektrode ist ein stabiles Lade- und Entladeverhalten in der Regel nach Abschluss des zweiten Lade- und Entladezyklus erreicht. Bei der negativen Elektrode ist ein stabiles Lade- und Entladeverhalten in der Regel nach Abschluss des vierten Lade- und Entladezyklus erreicht.

Auf diese Weise lassen sich die Kapazitäten $K_p$ und $K_n$ bestimmen. Unter Berücksichtigung des Gewichts m der jeweils untersuchten Elektroden lassen sich die spezifischen Kapazitäten K1 (K1 = $K_n$/ $m_{negative \, Elektrode}$ [mAh/g]) und K2 (K2 = $K_p$/ $m_{positive \, Elektrode}$ [mAh/g]) errechnen.

Besonders bevorzugtes Vorgehen zur Bestimmung von $K_n$ und $K_p$ / K1 und K2

Die Bestimmung der Kapazität der positiven Elektrode $K_p$ erfolgt besonders bevorzugt in einem Knopfzellen-Testsystem. Hierbei wird die positive Elektrode oder ein geeigneter Ausschnitt der positiven Elektrode, der gegebenenfalls aus der Elektrode ausgeschnitten oder ausgestanzt wird, unmittelbar nach ihrer oder seiner Herstellung getrocknet, bis ihr oder sein Wassergehalt weniger als 2 Gew.-% (bezogen auf das Gesamtgewicht der Elektrode oder des Ausschnitts) beträgt. Die Elektrode oder der Ausschnitt wird mit einem KOH-Elektrolyten (32 Gew.-% KOH) getränkt und in einem Knopfzellengehäuse gegen eine überdimensionierte Mischmetallelektrode geschaltet.

Rechnerisch (z.B. aus der bekannten spezifischen Kapazität des verwendeten Elektrodenaktivmaterials) oder durch Voruntersuchungen wird die Kapazität $K_p$ näherungsweise bestimmt.

Anschließend wird die positive Elektrode formiert. Hierzu wird die Testzelle zunächst mit einer konstanten Stromrate von 0,12 C für 10 h geladen, dann mit 0,267 C für 1,5 h entladen und anschließend mit 0,1 C für 4 h geladen. Die angegebenen "C-Werte" beschreiben hierbei die jeweiligen Lade- und Entladeströme bezogen auf die näherungsweise ermittelte Kapazität.

Für die eigentliche Messung wird die Testzelle bei Raumtemperatur (23 °C ± 2 °C) mit 0,2 C entladen, bis eine Entladeendspannung von 1,0 V erreicht war, und anschließend mit 0,1 C für 16 h geladen. Dieser Vorgang wird zweimal wiederholt. Die Kapazität $K_p$ der positiven Elektrode wird durch Messung des Entladestroms bei der dritten Entladung der Testzelle über die allgemeine Formel $K_P = I_{ENTLADESTROM} \times t_{ENTLADEZEIT}$ [mAh] ermittelt.

Die Bestimmung der Kapazität der negativen Elektrode $K_n$ erfolgt besonders bevorzugt mittels einer Dreielektroden-Messung in einem Becherglas. Hierzu wird die negative Elektrode über eine Dauer von 12 h in einem auf 80 °C temperierten KOH-Elektrolyten (32 Gew.-% KOH) gelagert und anschließend gegen eine überdimensionierte Aktivkohleelektrode geschaltet. Als Referenzelektrode dient eine Hg/HgO-Elektrode.

Die negative Elektrode wird im Potentialbereich OCV ÷ -1.0V vs. Hg/HgO bei Raumtemperatur (23 °C ± 2 °C) zunächst mit einem Ladestrom 59 mA/g an kohlenstoffbasiertem Speichermaterial in der Elektrode (bezogen auf das Trockengewicht (Wasseranteil < 2 Gew.-%) der Elektrode) geladen, dann mit einem gleich großen Entladestrom entladen (Beispiel: Bei einem Anteil von 0,5 g an kohlenstoffbasiertem Speichermaterial in der Elektrode betragen der Lade- und Entladestrom 29,5 mA). Dieser Vorgang wird viermal wiederholt. Die Kapazität $K_n$ der negativen Elektrode lässt durch Messung des Entladestroms bei der fünften Entladung über die allgemeine Formel $K_n = I_{ENTLADESTROM} \times t_{ENTLADEZEIT}$ [mAh] ermitteln.

Auf diese Weise lassen sich die Kapazitäten $K_p$ und $K_n$ bestimmen. Unter Berücksichtigung des Gewichts m der jeweils untersuchten Elektroden lassen sich die spezifischen Kapazitäten K1 (K1 = $K_n$/ $m_{negative\ Elektrode}$ [mAh/g]) und K2 (K2 = $K_p$/ $m_{positive\ Elektrode}$ [mAh/g]) errechnen.

Besonders bevorzugte Ausführungsform der erfindungsgemäßen Zelle (Variante A)

In einer besonders bevorzugten Ausführungsform ist die erfindungsgemäße Zelle eine Knopfzelle. In dieser Ausführungsform weist die Zelle bevorzugt mindestens eines der folgenden Merkmale auf:

- Die negative Elektrode ist eine Tablette, die eine mittlere Dicke im Bereich von 0,5 mm bis 3 mm aufweist.

- Die negative Elektrode umfasst als Anodenspeichermaterial Aktivkohle.

- Als zusätzliches Speichermaterial, das elektrische Energie mit Hilfe von Redoxreaktionen speichern kann, umfasst die negative Elektrode eine Wasserstoffspeicherlegierung oder Eisen- bzw. Eisenoxid-Pulver.

- Die negative Elektrode enthält einen Elektrodenbinder, bevorzugt PTFE.

- Der Anodenstromkollektor ist ein metallisches Netz, das die negative Elektrode ummantelt, oder ein elektrisch leitender Schaum.

- Die positive Elektrode liegt als dünne Schichtelektrode vor, die eine mittlere Dicke im Bereich von 30 $\mu$m bis 350 $\mu$m, bevorzugt von 150 $\mu$m bis 250 $\mu$m, aufweist.

- Die positive Elektrode umfasst Nickelhydroxid- und/oder Nickeloxyhydroxid und/oder ein Derivat dieser Nickelverbindungen.

- Der Kathodenstromkollektor ist ein elektrisch leitender Schaum.

- Die mittlere Dicke der negativen Elektrode steht in einem Verhältnis im Bereich von 2 : 1 bis 20 : 1 zur mittleren Dicke der positiven Elektrode. Innerhalb dieses Bereiches ist ein Verhältnis im Bereich von 4 : 1 bis 10 : 1 (mittlere Dicke negative Elektrode / mittlere Dicke positive Elektrode) weiter bevorzugt.

- Der Separator basiert auf einem Polyolefin.

- Der Elektrolyt enthält Kaliumhydroxid (KOH) oder eine Mischung aus Natriumhydroxid (NaOH) und Lithiumhydroxid (LiOH) oder eine Mischung aus KOH, NaOH und LiOH.

- Der erste Bereich und der zweite Bereich überlappen vollständig miteinander.

- Der erste Bereich erstreckt sich über eine Fläche F1 und der zweite Bereich erstreckt sich über eine Fläche F2, wobei F1 und F2 in einem Verhältnis im Bereich von 0,8 : 1 bis 1 : 1 zueinander stehen.

- Die negative Elektrode weist eine spezifische Kapazität K1 im Bereich von 10 bis 100 mAh/g auf. Innerhalb dieses Bereiches liegt K1 bevorzugt im Bereich von 20 bis 60 mAh/g.

- Die positive Elektrode weist eine spezifische Kapazität K2 im Bereich von 40 bis 310 mAh/g auf. Innerhalb dieses Bereiches liegt K1 bevorzugt im Bereich von 50 bis 240 mAh/g, besonders bevorzugt im Bereich von 60 bis 200 mAh/g.

- Die Kapazität der negativen Elektrode $K_n$ zur Kapazität der positiven Elektrode $K_p$ steht in einem Verhältnis X im Bereich von 1 : 1 bis 2 : 1. Innerhalb dieses Bereiches ist ein Verhältnis von $K_n$ / $K_p$ im Bereich von 1 : 1 bis 1,1: 1 weiter bevorzugt.

Besonders bevorzugt weist die erfindungsgemäße Zelle gemäß Variante A alle der vorstehenden Merkmale auf, insbesondere in den jeweils am meisten bevorzugten Ausführungsformen.

Besonders bevorzugte Ausführungsform der erfindungsgemäßen Zelle (Variante B)

In einer weiteren besonders bevorzugten Ausführungsform ist die erfindungsgemäße Zelle eine Stapelzelle oder eine Wickelzelle. In dieser Ausführungsform weist die Zelle bevorzugt mindestens eines der folgenden Merkmale auf:

- Die negative Elektrode liegt als dünne Schichtelektrode vor, die eine mittlere Dicke im Bereich von 0,2 mm bis 1,5 mm aufweist.

- Die negative Elektrode umfasst als Anodenspeichermaterial Aktivkohle sowie als zusätzliches Speichermaterial, das elektrische Energie mit Hilfe von Redoxreaktionen speichern kann, eine Wasserstoffspeicherlegierung oder Eisen- bzw. Eisenoxid-Pulver.

- Der Anodenstromkollektor ist ein elektrisch leitender Schaum.

- Die positive Elektrode liegt als dünne Schichtelektrode vor, die eine mittlere Dicke im Bereich von 30 $\mu$m bis 350 $\mu$m aufweist.

- Die positive Elektrode umfasst Nickelhydroxid- und/oder Nickeloxyhydroxid und/oder ein Derivat dieser Nickelverbindungen.

- Der Kathodenstromkollektor ist ein elektrisch leitender Schaum.

- Die mittlere Dicke der negativen Elektrode steht in einem Verhältnis im Bereich von 0,7 : 1 bis 25 : 1 zur mittleren Dicke der positiven Elektrode. Innerhalb dieses Bereiches ist ein Verhältnis im Bereich von 3,0 : 1 bis 15 : 1 (mittlere Dicke negative Elektrode / mittlere Dicke positive Elektrode) weiter bevorzugt.

- Der Separator basiert auf einem Polyolefin.

- Der Elektrolyt enthält Kaliumhydroxid (KOH) oder eine Mischung aus Natriumhydroxid (NaOH) und Lithiumhydroxid (LiOH) oder eine Mischung aus KOH, NaOH und LiOH.

- Der erste Bereich erstreckt sich über eine Fläche F1 und der zweite Bereich erstreckt sich über eine Fläche F2, wobei F1 $\leq$ F2 ist, insbesondere F1 und F2 in einem Verhältnis im Bereich von 1 : 1 bis 1,5 : 1 zueinander stehen.

- Die negative Elektrode weist eine spezifische Kapazität K1 im Bereich von 10 bis 100 mAh/g auf. Innerhalb dieses Bereiches liegt K1 bevorzugt im Bereich von 20 bis 60 mAh/g.

- Die positive Elektrode weist eine spezifische Kapazität K2 im Bereich von 40 bis 310 mAh/g auf. Innerhalb dieses Bereiches liegt K2 bevorzugt im Bereich von 50 bis 240 mAh/g, besonders bevorzugt im Bereich von 60 bis 200 mAh/g.

- Die Kapazität der negativen Elektrode $K_n$ zur Kapazität der positiven Elektrode $K_p$ steht in einem Verhältnis X im Bereich von 1 : 1 bis 2 : 1. Innerhalb dieses Bereiches ist ein Verhältnis $K_n / K_p$ im Bereich von 1 : 1 bis 1,1 : 1 weiter bevorzugt.

Besonders bevorzugt weist die erfindungsgemäße Zelle gemäß Variante B alle der vorstehenden Merkmale auf, insbesondere in den jeweils am meisten bevorzugten Ausführungsformen.

In einer weiteren, besonders bevorzugten Ausführungsform, umfasst die positive Elektrode als Leitfähigkeitsverbesserer mindestens ein Material aus der Gruppe mit Nickel, Kobalt, Kobaltoxid, Kobaltcarbonat, Kobalthydroxid, Graphit und Ruß, insbesondere in einem Anteil von 0,1 bis 25 Gew.-%.

Einige der genannten Merkmale sowie gegebenenfalls auch weitere Merkmale der erfindungsgemäßen asymmetrischen Zelle ergeben sich aus der nun folgenden Beschreibung bevorzugter Ausführungsformen der erfindungsgemäßen Zelle. Bei den dargestellten Ausführungsformen sind zahlreiche der oben beschriebenen Merkmale in Kombination miteinander verwirklicht. Dies ist jedoch nicht zwingend erforderlich. Es ist hervorzuheben, dass die im Zusammenhang mit den dargestellten Ausführungsformen der erfindungsgemäßen Zelle beschriebenen fakultativen Merkmale auch separat voneinander verwirklicht sein können. Die beschriebenen Ausführungsformen dienen lediglich zur Erläuterung und zum besseren Verständnis der Erfindung und sind in keiner Weise einschränkend zu verstehen.

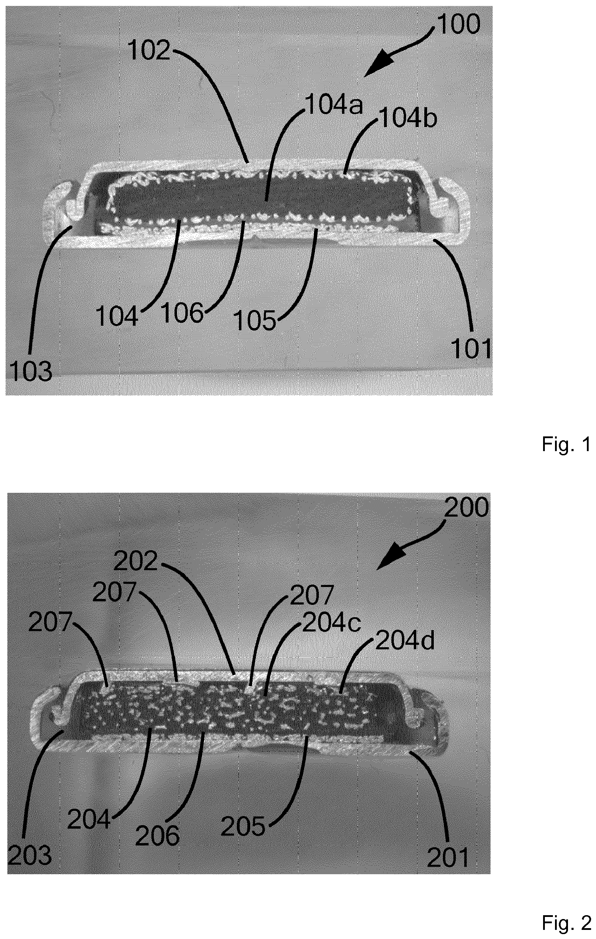

In Fig. 1 ist eine erste Ausführungsform einer erfindungsgemäßen Zelle gemäß Variante A dargestellt (photographische Aufnahme eines mittigen Schnitts durch die Zelle). Zur Erstellung der Aufnahme wurde eine Zelle nach nachfolgender Anleitung hergestellt und anschließend mittig durchtrennt.

In Fig. 2 ist eine zweite Ausführungsform einer erfindungsgemäßen Zelle gemäß Variante A dargestellt (photographische Aufnahme eines mittigen Schnitts durch die Zelle). Zur Erstellung der Aufnahme wurde eine Zelle nach nachfolgender Anleitung hergestellt und anschließend mittig durchtrennt.

Erste Ausführungsform gemäß Variante A

Die Zelle 100 umfasst ein flüssigkeits- und gasdichtes Gehäuse aus den Gehäusekomponenten 101 und 102. Die Gehäusekomponenten 101 und 102 sind durch die Dichtung 103 elektrisch voneinander isoliert. In dem Gehäuse sind die Elektroden 104 (negative Elektrode) und 105 (positive Elektrode) angeordnet. Zwischen den beiden Elektroden 104 und 105 ist die Separatorschicht 106 angeordnet. Die Elektroden 104 und 105 und der Separator 106 sind mit einem wässrigen alkalischen Elektrolyten getränkt.

Bei dem Gehäuse handelt es sich um ein Knopfzellengehäuse. Die Gehäusekomponente 101 dient als Zellenbecher, die Gehäusekomponente 102 als Zellendeckel. Die Dichtung 103 gewährleistet, dass kein Elektrolyt aus der Zelle auslaufen kann.

Die negative Elektrode 104 umfasst eine scheibenförmige Tablette 104a mit kreisrunder Geometrie, einer mittleren Dicke von 1,6 mm und einem Durchmesser 7 mm. Die Tablette besteht im Wesentlichen aus den folgenden Komponenten:

- 70,5 Gew.-% Aktivkohle als kohlenstoffbasiertes Speichermaterial

- 24 Gew.-% PTFE als Elektrodenbinder

- 3 Gew.% Ruß als zusätzliches Leitadditiv

- 2,5 Gew.-% einer Wasserstoffspeicherlegierung als zusätzliches Speichermaterial, das elektrische Energie mit Hilfe von Redoxreaktionen speichern kann

Zur Herstellung einer solchen Tablette war eine Trockenmischung aus den angeführten Komponenten kompaktiert worden. Die angeführten Prozentangaben beziehen sich auf das Trockengewicht der Tablette, bevor sie mit einem Elektrolyten getränkt wurden.

Neben der Tablette 104a umfasst die negative Elektrode 104 das Netz 104b aus Nickel, mit dem die Tablette ummantelt ist. Bei diesem Netz 104b handelt es sich um den Anodenstromkollektor. Einschließlich des Anodenstromkollektors wog die negative Elektrode 90 mg (Trockengewicht der Elektrode).

Die positive Elektrode 105 ist als Schichtelektrode ausgebildet. Sie weist ebenfalls eine kreisrunde Geometrie auf sowie eine mittlere Dicke von 0,16 mm und einen Durchmesser von 8 mm. Die positive Elektrode 105 besteht im Wesentlichen aus den folgenden Komponenten:

- Eine Folie aus Nickelschaum als Kathodenstromkollektor (60,2 Gew.-%)

- Nickelhydroxid als Kathodenspeichermaterial (36,2 Gew.-%)

- Carboxymethylzellulose als Elektrodenbinder (0,4 Gew.-%)

- Kobaltoxid als Leitfähigkeitsverbesserer (3,2 Gew.-%)

In den Klammern hinter den einzelnen Komponenten ist jeweils angegeben, welcher Gewichtsanteil am Gesamtgewicht der Elektrode der jeweiligen Komponente zuzuordnen ist, wobei sich die angeführten Prozentangaben auf das Trockengewicht der Elektrode (Wasseranteil < 2 Gew.-%) beziehen, bevor sie mit einem Elektrolyten getränkt wurden.

Zur Herstellung einer solchen positiven Elektrode war eine wässrige, pastöse Mischung aus den angeführten Komponenten in die Nickelschaumfolie eingearbeitet worden. Durch Trocknung wurde enthaltenes Wasser anschließend entfernt. Es folgte eine Kompaktierung des erhaltenen Verbundkörpers, beispielsweise mittels eines Kalanders.

Aus der so erhaltenen Elektrodenschicht wurden positive Elektroden mit der benötigten kreisrunden Geometrie ausgestanzt. Die positive Elektrode wog einschließlich des Kathodenstromkollektors 30 mg (Trockengewicht der Elektrode).

Die Separatorschicht 106 besteht aus einem Vlies aus Polypropylen. Der Separator wies eine mittlere Dicke von 250 μm (unverpresst) und einen Durchmesser von 9 mm auf.

Bei dem wässrigen alkalischen Elektrolyten, mit dem die Elektroden getränkt sind, handelt es sich um eine wässrige Kaliumhydroxid-Lösung mit einer Konzentration von 6 M Kaliumhydroxid.

**Zweite Ausführungsform gemäß Variante A**

Die Zelle 200 umfasst ein flüssigkeits- und gasdichtes Gehäuse aus den Gehäusekomponenten 201 und 202. Die Gehäusekomponenten 201 und 202 sind durch die Dichtung 203 elektrisch voneinander isoliert. In dem Gehäuse sind die Elektroden 204 (negative Elektrode) und 205 (positive Elektrode) angeordnet. Zwischen den beiden Elektroden 204 und 205 ist die Separatorschicht 206 angeordnet. Die Elektroden 204 und 205 und der Separator 206 sind mit einem wässrigen alkalischen Elektrolyten getränkt.

Bei dem Gehäuse handelt es sich um ein Knopfzellengehäuse. Die Gehäusekomponente 201 dient als Zellenbecher, die Gehäusekomponente 202 als Zellendeckel. Die Dichtung 203 gewährleistet, dass kein Elektrolyt aus der Zelle auslaufen kann.

Die elektrische Kontaktierung der negativen Elektrode 204 wird durch das in den Zellendeckel 202 eingeschweißte Streckgitter 207 verbessert.

Die negative Elektrode 204 ist als scheibenförmige Tablette ausgebildet. Sie weist eine kreisrunde Geometrie auf sowie eine mittlere Dicke von 1,20 mm und einen Durchmesser von 8 mm. Die negative Elektrode 204 besteht im Wesentlichen aus den folgenden Komponenten:

- Eine Folie aus Nickelschaum als Anodenstromkollektor (47,5 Gew.-%)

- Aktivkohle als kohlenstoffbasiertes Speichermaterial (47,5 Gew.-%)

- Carboxymethylzellulose als Elektrodenbinder (0,8 Gew.-%)

- Styrene Butadiene Rubber als Elektrodenbinder (1,8 Gew.-%)

- Ruß SuperC45 als zusätzliches Leitadditiv (1,1 Gew.-%)

- Eine Wasserstoffspeicherlegierung als zusätzliches Speichermaterial, das elektrische Energie mit Hilfe von Redoxreaktionen speichern kann (1,3 Gew.-%)

In den Klammern hinter den einzelnen Komponenten ist jeweils angegeben, welcher Gewichtsanteil am Gesamtgewicht der Elektrode der jeweiligen Komponente zuzuordnen ist, wobei sich die angeführten Prozentangaben auf das Trockengewicht der Elektrode (Wasseranteil < 2 Gew.-%) beziehen, bevor sie mit einem Elektrolyten getränkt wurden.

Die wesentlichen Komponenten der negativen Elektrode 204, der Anodenstromkollektor und das darin eingelagerte Anodenspeichermaterial, sind mit den Bezugszeichen 204c (Anodenspeichermaterial) und 204d (Anodenstromkollektor) versehen.

Die positive Elektrode 205 ist als Schichtelektrode ausgebildet. Sie weist ebenfalls eine kreisrunde Geometrie auf sowie eine mittlere Dicke von 0,13 mm und einen Durchmesser von 8 mm. Die positive Elektrode 205 besteht im Wesentlichen aus den folgenden Komponenten:

- Eine Folie aus Nickelschaum als Kathodenstromkollektor (70,0 Gew.-%)

- Nickelhydroxid als Kathodenspeichermaterial (27,0 Gew.-%)

- Carboxymethylzellulose als Elektrodenbinder (0,2 Gew.-%)

- Kobaltoxid als Leitfähigkeitsverbesserer (2,8 Gew.-%)

Zur Herstellung der positiven Elektrode 205 und der negativen Elektrode 204 war jeweils eine wässrige, pastöse Mischung aus den angeführten Komponenten in die Folie aus Nickelschaum eingearbeitet worden. Durch Trocknung wurde enthaltenes Wasser anschließend entfernt. Es folgte eine Kompaktierung des erhaltenen Verbundkörpers, beispielsweise mittels eines Kalanders.

Aus den so erhaltenen Elektrodenschichten wurden die Elektroden 204 und 205 mit der benötigten kreisrunden Geometrie ausgestanzt. Die positive Elektrode wog 26 mg, negative Elektrode wog 53 mg (Trockengewicht der Elektroden).

Die Separatorschicht 106 besteht aus einem Vlies aus Polypropylen. Der Separator wies eine mittlere Dicke von 250 $\mu$m (unverpresst) und einen Durchmesser von 9 mm auf.

Bei dem wässrigen alkalischen Elektrolyten, mit dem die Elektroden getränkt sind, handelt es sich um eine wässrige Kaliumhydroxid-Lösung mit einer Konzentration von 6 M Kaliumhydroxid.

Bestimmung der Elektrodenkapazitäten der zweiten Ausführungsform gemäß Variante A

Die Bestimmung der Kapazität $K_p$ der 30 mg schweren positiven Elektrode erfolgte in einem Knopfzellen-Testsystem. Hierbei wurde sichergestellt, dass der Wassergehalt der positiven Elektrode weniger als 2 Gew.-% (bezogen auf das Gesamtgewicht der Elektrode) betrug. Die Elektrode wurde mit einem KOH-Elektrolyten (32 Gew.-% KOH) getränkt und in einem größenangepassten Knopfzellengehäuse gegen eine überdimensionierte Mischmetallelektrode geschaltet.

Zunächst wurde rechnerisch oder durch Voruntersuchungen die Kapazität $K_p$ näherungsweise bestimmt. Vorliegend wurde aus der bekannten spezifischen Kapazität des verwendeten Nickelhydroxids ein näherungsweiser Wert von 2,0 mAh errechnet.

Anschließend wurde die positive Elektrode formiert. Hierzu wurde die Testzelle zunächst mit einer konstanten Stromrate von 0,12 C für 10 h geladen, dann mit 0,267 C für 1,5 h entladen und anschließend mit 0,1 C für 4 h geladen. Die angegebenen "C-Werte" beschreiben hierbei die jeweiligen Lade- und Entladeströme bezogen auf die näherungsweise ermittelte Kapazität. So entspricht z.B. die Stromrate von 0,12 C bei einer Kapazität von 2 mAh einem Ladestrom von 0,24 mA. Eine Ladung über 10 h entspricht somit 120 % der näherungsweise ermittelten Kapazität von 2,0 mAh. Eine Entladung über 1,5 h bei 0,267 C entspricht in Analogie hierzu 40 % der näherungsweise ermittelten Kapazität von 2,0 mAh.

Für die eigentliche Messung wurde die Testzelle bei Raumtemperatur (23 °C $\pm$ 2 °C) mit 0,2 C entladen, bis eine Entladeendspannung von 1,0 V erreicht war, und anschließend mit 0,1 C für 16 h geladen. Dieser Vorgang wurde zweimal wiederholt. Die Kapazität $K_p$ der positiven Elektrode wurde durch Messung des Entladestroms bei der dritten Entladung der Testzelle über die allgemeine Formel $K_P = I_{ENTLA\text{-}DESTROM} \times t_{ENTLADEZEIT}$ [mAh] ermittelt.

Die Bestimmung der Kapazität der negativen Elektrode $K_n$ erfolgte mittels einer Dreielektroden-Messung in einem Becherglas. Hierzu wurde die negative Elektrode über eine Dauer von 12 h in einem auf 80 °C temperierten KOH-Elektrolyten (32 Gew.-% KOH) gelagert und anschließend gegen eine überdimensionierte Aktivkohleelektrode geschaltet. Als Referenzelektrode diente eine Hg/HgO-Elektrode.

Die Elektrode wurde im Potentialbereich OCV $\div$ -1.0V vs. Hg/HgO bei Raumtemperatur (23 °C $\pm$ 2 °C) zunächst mit einem Ladestrom 1,49 mA (59 mA/g Aktivkohle in der Elektrode) geladen, dann mit einem Entladestrom von 1,49 mA entladen. Dieser Vorgang wurde viermal wiederholt. Die Kapazität $K_n$ der negativen Elektrode wurde durch Messung des Entladestroms bei der fünften Entladung über die allgemeine Formel $K_n = I_{ENTLADESTROM} \times t_{ENTLADEZEIT}$ [mAh] ermittelt.

Auf diese Weise wurden die Kapazitäten $K_p$ und $K_n$ bestimmt. Unter Berücksichtigung des Gewichts m der untersuchten Elektroden wurden die spezifischen Kapazitäten K1 (K1 = $K_n/m_{negative\ Elektrode}$ [mAh/g]) und K2 (K2 = $K_p/m_{positive\ Elektrode}$ [mAh/g]) errechnet.

Die Kapazität $K_n$ der negativen Elektrode betrug 2,20 mAh. Die hieraus errechnete spezifische Kapazität K1 betrug 41,5 mAh/g.

Die Kapazität $K_p$ der positiven Elektrode betrug 2,06 mAh. Die hieraus errechnete spezifische Kapazität K2 betrug 79,2 mAh/g.

Die Kapazität der negativen Elektrode $K_n$ stand somit in einem Verhältnis X zur Kapazität der positiven Elektrode $K_p$ von 1,07 zu 1.

**Patentansprüche**

1.  Asymmetrische, sekundäre elektrochemische Zelle, umfassend

    1.1 eine negative Elektrode enthaltend

    1.1.1 als Anodenspeichermaterial ein kohlenstoffbasiertes Speichermaterial, das die Speicherung von elektrischer Ladung in der Elektrode durch Ausbildung einer elektrischen Doppelschicht (Helmholtz-Doppelschicht) ermöglicht, und
    1.1.2 neben dem kohlenstoffbasierten Speichermaterial ein zusätzliches Speichermaterial, das elektrische Energie mit Hilfe von Redoxreaktionen speichern kann, und
    1.1.3 einen Anodenstromkollektor,

    1.2 eine positive Elektrode enthaltend

    1.2.1 als Kathodenspeichermaterial Nickelhydroxid- und/oder Nickeloxyhydroxid und/oder ein Derivat dieser Nickelverbindungen und
    1.2.2 einen Kathodenstromkollektor,

    1.3 mindestens eine poröse Separatorschicht mit einer ersten Flachseite und einer zweiten Flachseite zwischen der negativen und der positiven Elektrode, sowie
    1.4 einen wässrigen, alkalischen Elektrolyten, mit dem die Elektroden und der Separator getränkt sind und
    1.5 ein Gehäuse, das die Elektroden, den Separator und den Elektrolyten umschließt, wobei
    1.6 die erste Flachseite einen ersten Bereich umfasst, der in flächigem Kontakt mit dem Anodenspeichermaterial der negativen Elektrode steht, und die zweite Flachseite einen zweiten Bereich umfasst, der in flächigem Kontakt mit dem Kathodenspeichermaterial der positiven Elektrode steht, und
    1.7 der erste Bereich und der zweite Bereich in einem Überlappungsbereich zumindest teilweise überlappen,
    **dadurch gekennzeichnet, dass**
    1.8 die Kapazität der negativen Elektrode $K_n$ zur Kapazität der positiven Elektrode $K_p$ in einem Verhältnis X im Bereich von 0,7 : 1 bis 5 : 1 zueinander stehen, wobei
    1.9 das zusätzliche Speichermaterial in der negativen Elektrode in einem Anteil von 1,0 bis 3 Gew.-% enthalten ist.

2.  Zelle nach Anspruch 1, **dadurch gekennzeichnet,**

**dass** die Kapazität der negativen Elektrode $K_n$ zur Kapazität der positiven Elektrode $K_p$ in einem Verhältnis X im Bereich von 1 : 1 bis 5 : 1, bevorzugt im Bereich von 1 : 1 bis 2 : 1, besonders bevorzugt im Bereich von 1 : 1 bis 1,1: 1, steht.

3.  Zelle nach einem der vorhergehenden Ansprüche, **gekennzeichnet durch** mindestens eines der folgenden zusätzlichen Merkmale:

    3.1 Bei dem kohlenstoffbasierten Speichermaterial handelt es sich um mindestens ein Material aus der Gruppe mit Aktivkohle (AC), Aktivkohlefaser (AFC), Carbid-abgeleiteter Kohlenstoff (CDC), Kohlenstoff-Aerogel, Graphit (Graphen) und Kohlenstoffnanoröhrchen (CNTs).
    3.2 Das Anodenspeichermaterial ist in der negativen Elektrode in einem Anteil im Bereich von 40 bis 95 Gew.-% enthalten.
    3.3 Die negative Elektrode enthält einen Elektrodenbinder, insbesondere in einem Anteil von 0,1 bis 30 Gew.-%, bevorzugt in einem Anteil von 0,1 bis 5 Gew.-%.
    3.4 Bei dem zusätzlichen Speichermaterial handelt es sich um eine Wasserstoffspeicherlegierung oder um Eisen- bzw. Eisenoxid-Pulver.
    3.5 Die negative Elektrode liegt als Band, als dünne Schicht oder als Tablette vor.
    3.6 Der Anodenstromkollektor ist ein Stromableiter, der eine dreidimensionale Leitmatrix bildet, in die das Anodenspeichermaterial eingebettet ist, insbesondere ein elektrisch leitender Schaum, ein elektrisch leitendes Vlies, ein elektrisch leitender Filz oder ein elektrisch leitendes Gewebe.
    3.7 Der Anodenstromkollektor ist ein Gitter oder Netz, das die negative Elektrode ummantelt.
    3.8 Der Anodenstromkollektor ist in der negativen Elektrode in einem Anteil im Bereich von 5 bis 60 Gew.-% enthalten.
    3.9 Die negative Elektrode weist eine spezifische Kapazität K1 im Bereich von 1 bis 150 mAh/g auf, bevorzugt im Bereich von 10 bis 100 mAh/g, besonders bevorzugt im Bereich 20 bis 60 mAh/g.

4.  Zelle nach einem der vorhergehenden Ansprüche, **gekennzeichnet durch** mindestens eines der folgenden zusätzlichen Merkmale:

    4.1 Die positive Elektrode enthält neben dem Kathodenspeichermaterial mindestens einen Leitfähigkeitsverbesserer, bevorzugt aus der Gruppe mit Nickel, Kobalt, Kobaltoxid, Kobaltcarbonat, Kobalthydroxid, Graphit [in Beschreibung: Hard- und Soft-Carbon] und Ruß, insbesondere in einem Anteil von 0,1 bis 25 Gew.-%.
    4.2 Das Kathodenspeichermaterial ist in der positiven Elektrode in einem Gewichtsanteil im Bereich von 10 bis 95 Gew.-% enthalten.

4.3 Die positive Elektrode enthält einen Elektrodenbinder, insbesondere in einem Anteil von 0,1 bis 8 Gew.-%.

4.4 Der Kathodenstromkollektor ist ein Stromableiter, der eine dreidimensionale Leitmatrix bildet, in die das Kathodenspeichermaterial eingebettet ist, insbesondere ein elektrisch leitender Schaum, ein elektrisch leitendes Vlies, ein elektrisch leitender Filz oder ein elektrisch leitendes Gewebe.

4.5 Der Kathodenstromkollektor ist eine elektrisch leitende Folie, ein elektrisch leitendes Netz oder ein elektrisch leitendes Gitter.

4.6 Der Kathodenstromkollektor ist in der positiven Elektrode in einem Gewichtsanteil im Bereich von 5 bis 60 Gew.-% enthalten.

4.7 Die positive Elektrode weist eine spezifische Kapazität K2 im Bereich von 40 bis 310 mAh/g auf, bevorzugt im Bereich von 50 bis 240 mAh/g, besonders bevorzugt im Bereich 60 bis 200 mAh/g.

5. Zelle nach einem der vorhergehenden Ansprüche, **gekennzeichnet durch** mindestens eines der folgenden zusätzlichen Merkmale:

5.1 Die negative Elektrode weist eine mittlere Dicke D1 im Bereich von 30 $\mu$m bis 800 $\mu$m auf.
5.2 Die positive Elektrode weist eine mittlere Dicke D2 im Bereich von 30 $\mu$m bis 500 $\mu$m auf.
5.3 Die mittlere Dicke der negativen Elektrode steht in einem Verhältnis im Bereich von 0,7 : 1 bis 25 : 1, bevorzugt im Bereich von 3 : 1 bis 15 : 1, zur mittleren Dicke der positiven Elektrode.
5.4 Der erste und der zweite Bereich überlappen vollständig miteinander.
5.5 Der erste Bereich erstreckt sich über eine Fläche F1 und der zweite Bereich erstreckt sich über eine Fläche F2, wobei F1 und F2 in einem Verhältnis im Bereich von 0,8 : 1 bis 10 : 1, bevorzugt im Bereich von 1 : 1 bis 1,5 : 1 oder im Bereich von 0,8 : 1 bis 1 : 1, zueinanderstehen.

6. Zelle nach einem der vorhergehenden Ansprüche, **gekennzeichnet durch** mindestens eines der folgenden zusätzlichen Merkmale:

6.1 Die negative Elektrode liegt in Form von zwei separaten Schichten vor und die positive Elektrode liegt in Form von einer Schicht vor, wobei die Schichten und der mindestens eine Separator in der Sequenz negative Elektrode / Separator / positive Elektrode / Separator / negative Elektrode angeordnet sind.
6.2 Die zwei separaten Schichten weisen eine mittlere Dicke D1a und eine mittlere Dicke D1b auf, wobei die Summe aus D1a und D1b = D1 ist.

7. Zelle nach einem der vorhergehenden Ansprüche, **gekennzeichnet durch** mindestens eines der folgenden zusätzlichen Merkmale:

7.1 Die negative Elektrode und die positive Elektrode liegen jeweils in Form eines Elektrodenbandes vor und die mindestens eine Separatorschicht liegt in Form mindestens eines Separatorbandes vor.
7.2 Die bandförmige positive und die bandförmige negative Elektrode und das mindestens eine Separatorband sind zu einem bandförmigen Elektroden-Separator-Verbund verarbeitet, in dem das mindestens eine Separatorband zwischen der positiven und der negativen Elektrode angeordnet ist.
7.3 Der Elektroden-Separator-Verbund liegt als spiralförmiger Wickel vor.
7.4 Die bandförmige negative Elektrode ist länger als die bandförmige positive Elektrode und überlappt diese innerhalb des Elektroden-Separator-Verbunds an mindestens einem Ende.

8. Zelle nach einem der vorhergehenden Ansprüche, **gekennzeichnet durch** das Merkmal
8.1 Die Zelle ist eine Knopfzelle.
sowie durch mindestens eines der folgenden zusätzlichen Merkmale:

8.2 Die negative Elektrode ist eine Tablette, die eine mittlere Dicke im Bereich von 0,5 mm bis 3 mm aufweist.
8.3 Die negative Elektrode umfasst als Anodenspeichermaterial Aktivkohle sowie als zusätzliches Speichermaterial, das elektrische Energie mit Hilfe von Redoxreaktionen speichern kann, eine Wasserstoffspeicherlegierung oder Eisen- bzw. Eisenoxid-Pulver.
8.4 Die negative Elektrode enthält PTFE als Elektrodenbinder.
8.5 Der Anodenstromkollektor ist ein metallisches Netz, das die negative Elektrode ummantelt.
8.6 Die positive Elektrode liegt als dünne Schichtelektrode vor, die eine mittlere Dicke im Bereich von 30 $\mu$m bis 350 $\mu$m, bevorzugt im Bereich von 150 $\mu$m bis 250 $\mu$m, aufweist.
8.7 Die positive Elektrode umfasst Nickelhydroxid- und/oder Nickeloxyhydroxid und/oder ein Derivat dieser Nickelverbindungen.
8.8 Der Kathodenstromkollektor ist ein elektrisch leitender Schaum.
8.9 Die mittlere Dicke der negativen Elektrode steht in einem Verhältnis im Bereich von 2 : 1 bis 20 : 1, bevorzugt im Bereich von 4 : 1 bis 10 : 1, zur mittleren Dicke der positiven Elektrode.

8.10 Der Separator basiert auf einem Polyolefin.

8.11 Der Elektrolyt enthält KOH oder eine Mischung aus NaOH und LiOH oder eine Mischung aus KOH, NaOH und LiOH.

8.12 Der erste Bereich und der zweite Bereich überlappen vollständig miteinander und der erste Bereich erstreckt sich über eine Fläche F1 und der zweite Bereich erstreckt sich über eine Fläche F2, wobei F1 und F2 in einem Verhältnis im Bereich von 0,8 : 1 bis 1 : 1 zueinander stehen.

8.13 Die negative Elektrode weist eine spezifische Kapazität K1 im Bereich von 10 bis 100 mAh/g, besonders bevorzugt im Bereich von 20 bis 60 mAh/g, auf.

8.14 Die positive Elektrode weist eine spezifische Kapazität K2 im Bereich von 40 bis 310 mAh/g auf, bevorzugt im Bereich von 50 bis 240 mAh/g, besonders bevorzugt im Bereich von 60 bis 200 mAh/g.

8.15 Die Kapazität der negativen Elektrode $K_n$ zur Kapazität der positiven Elektrode $K_p$ steht in einem Verhältnis X im Bereich von 1 : 1 bis 2 : 1, besonders bevorzugt im Bereich von 1 : 1 bis 1,1: 1.

9. Zelle nach einem der vorhergehenden Ansprüche, **gekennzeichnet durch** das Merkmal

9.1 Die Zelle ist eine Stapelzelle oder eine Wickelzelle.

sowie durch mindestens eines der folgenden zusätzlichen Merkmale:

9.2 Die negative Elektrode liegt als dünne Schichtelektrode vor, die eine mittlere Dicke im Bereich von 0,2 mm bis 1,5 mm aufweist.

9.3 Die negative Elektrode umfasst als Anodenspeichermaterial Aktivkohle sowie als zusätzliches Speichermaterial, das elektrische Energie mit Hilfe von Redoxreaktionen speichern kann, eine Wasserstoffspeicherlegierung oder Eisen- bzw. Eisenoxid-Pulver.

9.4 Der Anodenstromkollektor ist ein elektrisch leitender Schaum.

9.5 Die positive Elektrode liegt als dünne Schichtelektrode vor, die eine mittlere Dicke im Bereich von 30 $\mu$m bis 350 $\mu$m aufweist.

9.6 Die positive Elektrode umfasst Nickelhydroxid- und/oder Nickeloxyhydroxid und/oder ein Derivat dieser Nickelverbindungen.

9.7 Der Kathodenstromkollektor ist ein elektrisch leitender Schaum.

9.8 Die mittlere Dicke der negativen Elektrode steht in einem Verhältnis im Bereich von 0,7 : 1 bis 25 : 1, bevorzugt im Bereich von 3,0: 1 bis 15 : 1, zur mittleren Dicke der positiven Elektrode.

9.9 Der Separator basiert auf einem Polyolefin.

9.10 Der Elektrolyt enthält KOH oder eine Mischung aus NaOH und LiOH oder eine Mischung aus KOH, NaOH und LiOH..

9.11 Der erste Bereich erstreckt sich über eine Fläche F1 und der zweite Bereich erstreckt sich über eine Fläche F2, wobei F1 ≤ F2 ist, insbesondere F1 und F2 in einem Verhältnis im Bereich von 1 : 1 bis 1,5 : 1 zueinander stehen.

9.12 Die negative Elektrode weist eine spezifische Kapazität K1 im Bereich von 10 bis 100 mAh/g, besonders bevorzugt im Bereich von 20 bis 60 mAh/g, auf.

9.13 Die positive Elektrode weist eine spezifische Kapazität K2 im Bereich von 40 bis 310 mAh/g auf, bevorzugt im Bereich von 50 bis 240 mAh/g, besonders bevorzugt im Bereich von 60 bis 200 mAh/g.

9.14 Die Kapazität der negativen Elektrode $K_n$ zur Kapazität der positiven Elektrode $K_p$ steht in einem Verhältnis X im Bereich von 1 : 1 bis 2 : 1, besonders bevorzugt im Bereich von 1 : 1 bis 1,1: 1.

10. Zelle nach Anspruch 9, **gekennzeichnet durch** mindestens eines der folgenden zusätzlichen Merkmale:

10.1 Die positive Elektrode umfasst als Leitfähigkeitsverbesserer mindestens ein Material aus der Gruppe mit Nickel, Kobalt, Kobaltoxid, Kobaltcarbonat, Kobalthydroxid, Graphit und Ruß, insbesondere in einem Anteil von 0,1 bis 25 Gew.-%.

**Claims**

1. Asymmetric, secondary electrochemical cell, comprising

1.1 a negative electrode containing

1.1.1 as anode storage material a carbon-based storage material which allows the storage of electrical charge in the electrode by formation of an electrical double layer (Helmholtz double layer), and

1.1.2 in addition to the carbon-based storage material an additional storage material, which can store electrical energy with the aid of redox reactions, and

1.1.3 an anode current collector,

1.2 a positive electrode containing

1.2.1 as cathode storage material nickel hydroxide and/or nickel oxyhydroxide and/or a derivative of these nickel compounds and

1.2.2 a cathode current collector,

1.3 at least one porous separator layer with a first flat side and a second flat side between the negative electrode and the positive electrode, and also

1.4 an aqueous, alkaline electrolyte, with which the electrodes and the separator are impregnated, and

1.5 a housing, which encloses the electrodes, the separator and the electrolyte, wherein

1.6 the first flat side comprises a first region, which is in surface-area contact with the anode storage material of the negative electrode, and the second flat side comprises a second region, which is in surface-area contact with the cathode storage material of the positive electrode, and

1.7 the first region and the second region at least partially overlap in an overlapping region, **characterized in that**

1.8 the capacity of the negative electrode $K_n$ in relation to the capacity of the positive electrode $K_p$ is in a ratio X in the range of 0.7:1 to 5:1, wherein

1.9 the additional storage material is contained in the negative electrode in a proportion of 1.0 to 3% by weight.

2. Cell according to Claim 1, **characterized in that** the capacity of the negative electrode $K_n$ in relation to the capacity of the positive electrode $K_p$ is in a ratio X in the range of 1:1 to 5:1, preferably in the range of 1:1 to 2:1, particularly preferably in the range of 1:1 to 1.1:1.

3. Cell according to one of the preceding claims, **characterized by** at least one of the following additional features:

3.1 the carbon-based storage material is at least one material from the group comprising activated carbon (AC), activated carbon fibre (AFC), carbide-derived carbon (CDC), carbon aerogel, graphite (graphene) and carbon nanotubes (CNTs)

3.2 the anode storage material is contained in the negative electrode in a proportion in the range of 40 to 95% by weight

3.3 the negative electrode contains an electrode binder, in particular in a proportion of 0.1 to 30% by weight, preferably in a proportion of 0.1 to 5% by weight

3.4 the additional storage material is a hydrogen storage alloy or an iron or iron-oxide powder

3.5 the negative electrode takes the form of a strip, a thin layer or a tablet

3.6 the anode current collector is a current collector that forms a three-dimensional conducting matrix in which the anode storage material is embedded, in particular an electrically conducting foam, an electrically conducting nonwoven fabric, an electrically conducting felt or an electrically conducting woven fabric

3.7 the anode current collector is a grid or mesh that encloses the negative electrode

3.8 the anode current collector is contained in the negative electrode in a proportion in the range of 5 to 60% by weight

3.9 the negative electrode has a specific capacity $K_1$ in the range of 1 to 150 mAh/g, preferably in the range of 10 to 100 mAh/g, particularly preferably in the range of 20 to 60 mAh/g.

4. Cell according to one of the preceding claims, **characterized by** at least one of the following additional features:

4.1 in addition to the cathode storage material, the positive electrode contains at least one conductivity improver, preferably from the group comprising nickel, cobalt, cobalt oxide, cobalt carbonate, cobalt hydroxide, graphite [in the description: hard and soft carbon] and carbon black, in particular in a proportion of 0.1 to 25% by weight

4.2 the cathode storage material is contained in the positive electrode in a proportion by weight in the range of 10 to 95%

4.3 the positive electrode contains an electrode binder, in particular in a proportion of 0.1 to 8% by weight

4.4 the cathode current collector is a current collector that forms a three-dimensional conducting matrix in which the cathode storage material is embedded, in particular an electrically conducting foam, an electrically conducting nonwoven fabric, an electrically conducting felt or an electrically conducting woven fabric

4.5 the cathode current collector is an electrically conducting foil, an electrically conducting mesh or an electrically conducting grid

4.6 the cathode current collector is contained in the positive electrode in a proportion by weight in the range of 5 to 60% by weight

4.7 the positive electrode has a specific capacity $K_2$ in the range of 40 to 310 mAh/g, preferably in the range of 50 to 240 mAh/g, particularly preferably in the range of 60 to 200 mAh/g.

5. Cell according to one of the preceding claims, **characterized by** at least one of the following additional features:

5.1 the negative electrode has an average thickness D1 in the range of 30 $\mu$m to 800 $\mu$m

5.2 the positive electrode has an average thickness D2 in the range of 30 $\mu$m to 500 $\mu$m

5.3 the average thickness of the negative electrode in relation to the average thickness of the positive electrode is in a ratio in the range of 0.7:1 to 25:1, preferably in the range of 3:1 to 15:1

5.4 the first region and the second region overlap completely with one another

5.5 the first region extends over an area F1 and the second region extends over an area F2, where F1 and F2 are in relation to one another in a ratio in the range of 0.8:1 to 10:1, preferably in the range of 1:1 to 1.5:1 or in the range of 0.8:1 to 1:1.

6. Cell according to one of the preceding claims, **characterized by** at least one of the following additional features:

6.1 the negative electrode takes the form of two separate layers and the positive electrode takes the form of one layer, the layers and the at least one separator being arranged in the sequence negative electrode/separator/positive electrode/separator/negative electrode

6.2 the two separate layers have an average thickness D1a an average thickness D1b, where the sum of D1a and D1b = D1.

7. Cell according to one of the preceding claims, **characterized by** at least one of the following additional features:

7.1 the negative electrode and the positive electrode respectively take the form of an electrode strip and the at least one separator layer takes the form of at least one separator strip

7.2 the positive electrode in strip form and the negative electrode in strip form and the at least one separator strip process to form an electrode-separator assembly in strip form, in which the at least one separator strip is arranged between the positive electrode and the negative electrode

7.3 the electrode-separator assembly takes the form of a spiral coil

7.4 the negative electrode in strip form is longer than the positive electrode in strip form and overlaps the latter within the electrode-separator assembly at at least one end.

8. Cell according to one of the preceding claims, **characterized by** the feature
8.1 the cell is a button cell and also by at least one of the following additional features:

8.2 the negative electrode is a tablet that has an average thickness in the range of 0.5 mm to 3 mm

8.3 the negative electrode comprises as anode storage material activated carbon and as additional storage material that can store electrical energy with the aid of redox reactions a hydrogen storage alloy or iron or iron-oxide powder

8.4 the negative electrode contains PTFE as an electrode binder

8.5 the anode current collector is a metal mesh that encloses the negative electrode

8.6 the positive electrode takes the form of a thin layer electrode that has an average thickness in the range of 30 $\mu$m to 350 $\mu$m, preferably in the range of 150 $\mu$m to 250 $\mu$m

8.7 the positive electrode comprises nickel hydroxide and/or nickel oxyhydroxide and/or a derivative of these nickel compounds

8.8 the cathode current collector is an electrically conducting foam

8.9 the average thickness of the negative electrode in relation to the average thickness of the positive electrode is in a ratio in the range of 2:1 to 20:1, preferably in the range of 4:1 to 10:1

8.10 the separator is based on a polyolefin

8.11 the electrolyte contains KOH or a mixture of NaOH and LiOH or a mixture of KOH, NaOH and LiOH.

8.12 the first region and the second region overlap completely with one another and the first region extends over an area F1 and the second region extends over an area F2, where F1 and F2 are in relation to one another in a ratio in the range of 0.8:1 to 1:1

8.13 the negative electrode has a specific capacity K1 in the range of 10 to 100 mAh/g, particularly preferably in the range of 20 to 60 mAh/g

8.14 the positive electrode has a specific capacity K2 in the range of 40 to 310 mAh/g, preferably in the range of 50 to 240 mAh/g, particularly preferably in the range of 60 to 200 mAh/g

8.15 the capacity of the negative electrode $K_n$ in relation to the capacity of the positive electrode $K_p$ is in a ratio X in the range of 1:1 to 2:1, particularly preferably in the range of 1:1 to 1.1:1.

9. Cell according to one of the preceding claims, **characterized by** the feature
9.1 the cell is a stacked cell or a wound cell
and also by at least one of the following additional features:

9.2 the negative electrode takes the form of a thin layer electrode that has an average thickness in the range of 0.2 mm to 1.5 mm 9.3 the negative electrode comprises as anode storage material activated carbon and as additional storage material that can store electrical energy with the aid of redox reactions a hydrogen storage alloy or iron or iron-oxide powder

9.4 the anode current collector is an electrically conducting foam

9.5 the positive electrode takes the form of a thin layer electrode that has an average thickness in the range of 30 $\mu$m to 350 $\mu$m

9.6 the positive electrode comprises nickel hydroxide and/or nickel oxyhydroxide and/or a derivative of these nickel compounds

9.7 the cathode current collector is an electrically conducting foam

9.8 the average thickness of the negative electrode in relation to the average thickness of the positive electrode is in a ratio in the range of 0.7:1 to 25:1, preferably in the range of 3.0:1 to 15:1

9.9 the separator is based on a polyolefin

9.10 the electrolyte contains KOH or a mixture of NaOH and LiOH or a mixture of KOH, NaOH and LiOH

9.11 the first region extends over an area F1 and the second region extends over an area F2, where F1 $\leq$ F2, in particular F1 and F2 are in relation to one another in a ratio in the range of 1:1 to 1.5:1

9.12 the negative electrode has a specific capacity K1 in the range of 10 to 100 mAh/g, particularly preferably in the range of 20 to 60 mAh/g

9.13 the positive electrode has a specific capacity K2 in the range of 40 to 310 mAh/g, preferably in the range of 50 to 240 mAh/g, particularly preferably in the range of 60 to 200 mAh/g

9.14 the capacity of the negative electrode $K_n$ in relation to the capacity of the positive electrode $K_p$ is in a ratio X in the range of 1:1 to 2:1, particularly preferably in the range of 1:1 to 1.1:1.

10. Cell according to Claim 9, **characterized by** at least one of the following additional features:

10.1 the positive electrode comprises as a conductivity improver at least one material from the group comprising nickel, cobalt, cobalt oxide, cobalt carbonate, cobalt hydroxide, graphite and carbon black, in particular in a proportion of 0.1 to 25% by weight.

## Revendications

1. Cellule électrochimique secondaire asymétrique, comprenant

1.1 une électrode négative contenant

1.1.1 un matériau d'accumulation à base de carbone en tant que matériau d'accumulation d'anode, permettant d'accumuler la charge électrique dans l'électrode par formation d'une double couche électrique (double couche Helmholtz), et

1.1.2 un matériau d'accumulation supplémentaire en plus du matériau d'accumulation à base de carbone, lequel peut accumuler de l'énergie électrique par oxydo-réduction, et

1.1.3 un collecteur de courant anodique,

1.2 une électrode positive contenant

1.2.1 de l'hydroxyde de nickel et/ou de l'oxyhydroxyde de nickel et/ou un dérivé de ces composés de nickel, en tant que matériau d'accumulation de cathode, et

1.2.2 un collecteur de courant cathodique,

1.3 au moins une couche séparatrice poreuse avec une première face plate et une deuxième face plate entre l'électrode négative et l'électrode positive, et

1.4 un électrolyte alcalin aqueux, avec lequel les électrodes et le séparateur sont imprégnés, et

1.5 un boîtier entourant les électrodes, le séparateur et l'électrolyte, dans laquelle

1.6 la première face plate comporte une première région en contact surfacique avec le matériau d'accumulation d'anode de l'électrode négative, et la deuxième face plate comporte une deuxième région en contact surfacique avec le matériau d'accumulation de cathode de l'électrode positive, et

1.7 la première région et la deuxième région se chevauchent au moins partiellement dans une région de chevauchement,
**caractérisée en ce que**

1.8 la capacité de l'électrode négative $K_n$ par rapport à la capacité de l'électrode positive $K_p$ présente un rapport X de l'une à l'autre compris entre 0,7:1 et 5:1, où

1.9 le matériau d'accumulation supplémentaire est contenu dans l'électrode négative dans une proportion de 1,0 à 3% en poids.

2. Cellule selon la revendication 1, **caractérisée en ce que** la capacité de l'électrode négative $K_n$ par rapport à la capacité de l'électrode positive $K_p$ présente un rapport X compris entre 1:1 et 5:1, de préférence entre 1:1 et 2:1, de façon particulièrement préférentielle entre 1:1 et 1,1:1.

3. Cellule selon l'une des revendications précédentes, **caractérisée par** l'une au moins des caractéristiques supplémentaires suivantes :

3.1 pour ce qui est du matériau d'accumulation à base de carbone, il s'agit d'au moins un matériau issu du groupe comprenant le charbon actif (AC), les fibres de charbon actif (AFC), le carbone dérivé du carbure (CDC), l'aérogel de carbone, le graphite (graphène) et les nanotubes de carbone (CNTs),

3.2 le matériau d'accumulation d'anode est contenu dans l'électrode négative dans une proportion dans la plage de 40 à 95% en poids,

3.3 l'électrode négative contient un agent de liaison d'électrode, en particulier dans une proportion de 0,1 à 30% en poids, de préférence dans une proportion de 0,1 à 5% en poids,

3.4 pour ce qui est du matériau d'accumulation supplémentaire, il s'agit d'un alliage d'accumulation d'hydrogène ou d'une poudre de fer ou d'oxyde de fer, 3.5 l'électrode négative est présente sous forme de bande, de couche fine ou de tablette,

3.6 le collecteur de courant anodique est un dérivateur de courant formant une matrice conductrice tridimensionnelle dans laquelle est enrobé le matériau d'accumulation d'anode, en particulier une mousse électriquement conductrice, un non-tissé électriquement conducteur, un feutre électriquement conducteur ou un tissu électriquement conducteur,

3.7 le collecteur de courant anodique est une grille ou un filet enveloppant l'électrode négative,

3.8 le collecteur de courant anodique est contenu dans l'électrode négative dans une proportion dans la plage de 5 à 60% en poids,

3.9 l'électrode négative présente une capacité spécifique K1 comprise entre 1 et 150 mAh/g, de préférence entre 10 et 100 mAh/g, de façon particulièrement préférentielle entre 20 et 60 mAh/g.

4. Cellule selon l'une des revendications précédentes, **caractérisée par** l'une au moins des caractéristiques supplémentaires suivantes :

4.1 l'électrode positive contient au moins un agent d'amélioration de la conductivité en plus du matériau d'accumulation de cathode, de préférence issu du groupe comprenant le nickel, le cobalt, l'oxyde de cobalt, le carbonate de cobalt, l'hydroxyde de cobalt, le graphite [dans la description : carbone dur et souple] et le noir de carbone, en particulier dans une proportion de 0,1 à 25% en poids,

4.2 le matériau d'accumulation de cathode est contenu dans l'électrode positive dans une proportion pondérale dans la plage de 10 à 95% en poids,

4.3 l'électrode positive contient un agent de liaison d'électrode, en particulier dans une proportion de 0,1 à 8% en poids,

4.4 le collecteur de courant cathodique est un dérivateur de courant formant une matrice conductrice tridimensionnelle dans laquelle est enrobé le matériau d'accumulation de cathode, en particulier une mousse électriquement conductrice, un non-tissé électriquement conducteur, un feutre électriquement conducteur ou un tissu électriquement conducteur,

4.5 le collecteur de courant cathodique est une feuille électriquement conductrice, un filet électriquement conducteur ou une grille électriquement conductrice, 4.6 le collecteur de courant cathodique est contenu dans l'électrode positive dans une proportion pondérale dans la plage de 5 à 60% en poids,

4.7 l'électrode positive présente une capacité spécifique K2 comprise entre 40 et 310 mAh/g, de préférence entre 50 et 240 mAh/g, de façon particulièrement préférentielle entre 60 et 200 mAh/g.

5. Cellule selon l'une des revendications précédentes, **caractérisée par** l'une au moins des caractéristiques supplémentaires suivantes :

5.1 l'électrode négative présente une épaisseur moyenne D1 comprise entre 30 $\mu$m et 800 $\mu$m,

5.2 l'électrode positive présente une épaisseur moyenne D2 comprise entre 30 $\mu$m et 500 $\mu$m,

5.3 l'épaisseur moyenne de l'électrode négative présente un rapport dans la plage de 0,7:1 à 25:1, de préférence dans la plage de 3:1 à 15:1, par rapport à l'épaisseur moyenne de l'électrode positive,

5.4 la première région et la deuxième région se chevauchent complètement entre elles,

5.5 la première région s'étend sur une surface F1 et la deuxième région s'étend sur une surface F2, où F1 et F2 présentent un rapport dans la plage de 0,8:1 à 10:1, de préférence dans la plage de 1 : 1 à 1,5:1 ou dans la plage de 0,8:1 à 1:1 de l'une à l'autre.

6. Cellule selon l'une des revendications précédentes, **caractérisée par** l'une au moins des caractéristiques supplémentaires suivantes :

6.1 l'électrode négative se présente sous la forme de deux couches séparées et l'électrode positive sous la forme d'une couche, où les couches et l'au moins un séparateur sont disposés dans l'ordre suivant : électrode négative / séparateur / électrode positive / séparateur / électrode négative,

6.2 les deux couches séparées présentent une épaisseur moyenne D1a et une épaisseur moyenne D1b, où la somme de D1a et D1b = D1.

**7.** Cellule selon l'une des revendications précédentes, **caractérisée par** l'une au moins des caractéristiques supplémentaires suivantes :

> 7.1 l'électrode négative et l'électrode positive se présentent respectivement sous la forme d'une bande d'électrode et l'au moins une couche séparatrice se présente sous la forme d'au moins une bande de séparateur,
>
> 7.2 l'électrode positive sous forme de bande et l'électrode négative sous forme de bande et l'au moins une bande de séparateur sont transformées en un assemblage électrodes-séparateur en forme de bande, dans lequel l'au moins une bande de séparateur est disposée entre l'électrode positive et l'électrode négative,
>
> 7.3 l'assemblage électrodes-séparateur se présente sous la forme d'une bobine en forme de spirale,
>
> 7.4 l'électrode négative en forme de bande est plus longue que l'électrode positive en forme de bande et chevauche celle-ci à au moins une extrémité dans l'assemblage électrodes-séparateur.

**8.** Cellule selon l'une des revendications précédentes, **caractérisée par** la caractéristique suivante :
8.1 la cellule est une pile bouton,
ainsi que par l'une au moins des caractéristiques supplémentaires suivantes :

> 8.2 l'électrode négative est une tablette présentant une épaisseur moyenne comprise dans la plage entre 0,5 mm et 3 mm,
>
> 8.3 l'électrode négative comporte du charbon actif en tant que matériau d'accumulation d'anode, ainsi qu'un alliage d'accumulation d'hydrogène ou une poudre de fer ou d'oxyde de fer en tant que matériau d'accumulation supplémentaire, lequel est capable d'accumuler de l'énergie électrique par oxydo-réduction,
>
> 8.4 l'électrode négative contient du PTFE en tant qu'agent de liaison d'électrode,
>
> 8.5 le collecteur de courant anodique est un filet métallique enveloppant l'électrode négative,
>
> 8.6 l'électrode positive se présente sous la forme d'une électrode en couche fine, laquelle présente une épaisseur moyenne dans la plage de 30 $\mu$m à 350 $\mu$m, de préférence dans la plage de 150 $\mu$m et 250 $\mu$m,
>
> 8.7 l'électrode positive comporte de l'hydroxyde de nickel et/ou de l'oxyhydroxyde de nickel et/ou un dérivé de ces composés de nickel,
>
> 8.8 le collecteur de courant cathodique est une mousse électriquement conductrice,
>
> 8.9 l'épaisseur moyenne de l'électrode négative présente un rapport compris dans la plage de 2:1 à 20:1, de préférence compris dans la plage de 4:1 à 10:1, par rapport à l'épaisseur moyenne de l'électrode positive,

8.10 le séparateur est réalisé à base de polyoléfine,

8.11 l'électrolyte contient du KOH ou un mélange de NaOH et de LiOH ou un mélange de KOH, de NaOH et de LiOH, 8.12 la première région et la deuxième région se chevauchent complètement entre elles et la première région s'étend sur une surface F1 et la deuxième région s'étend sur une surface F2, où F1 et F2 présentent un rapport compris dans la plage de 0,8:1 à 1:1 de l'une à l'autre,

8.13 l'électrode négative présente une capacité spécifique K1 comprise entre 10 et 100 mAh/g, de façon particulièrement préférentielle entre 20 et 60 mAh/g, 8.14 l'électrode positive présente une capacité spécifique K2 comprise entre 40 et 310 mAh/g, de préférence entre 50 et 240 mAh/g, de façon particulièrement préférentielle entre 60 et 200 mAh/g, 8.15 la capacité de l'électrode négative $K_n$ par rapport à la capacité de l'électrode positive $K_p$ présente un rapport X compris dans la plage de 1:1 à 2:1, de façon particulièrement préférentielle compris dans la plage de 1:1 à 1,1:1.

**9.** Cellule selon l'une des revendications précédentes, **caractérisée par** la caractéristique suivante :
9.1 la cellule est une cellule à empilement ou une cellule à enroulement,
ainsi que par l'une au moins des caractéristiques supplémentaires suivantes :

> 9.2 l'électrode négative se présente sous la forme d'une électrode en couche fine présentant une épaisseur moyenne dans la plage de 0,2 mm à 1,5 mm,
>
> 9.3 l'électrode négative comporte du charbon actif en tant que matériau d'accumulation d'anode, ainsi qu'un alliage d'accumulation d'hydrogène ou une poudre de fer ou d'oxyde de fer en tant que matériau d'accumulation supplémentaire, lequel est capable d'accumuler de l'énergie électrique par oxydo-réduction,
>
> 9.4 le collecteur de courant anodique est une mousse électriquement conductrice,
>
> 9.5 l'électrode positive se présente sous la forme d'une électrode en couche fine présentant une épaisseur moyenne dans la plage de 30 $\mu$m à 350 $\mu$m,
>
> 9.6 l'électrode positive comporte de l'hydroxyde de nickel et/ou de l'oxyhydroxyde de nickel et/ou un dérivé de ces composés de nickel,
>
> 9.7 le collecteur de courant cathodique est une mousse électriquement conductrice,
>
> 9.8 l'épaisseur moyenne de l'électrode négative présente un rapport compris dans la plage de 0,7:1 à 25:1, de préférence compris dans la plage de 3,0:1 à 15:1, par rapport à l'épaisseur moyenne de l'électrode positive, 9.9 le séparateur est réalisé à base de polyoléfine,
9.10 l'électrolyte contient du KOH ou un mélange de NaOH et de LiOH ou un mélange de KOH, de NaOH et de LiOH, 9.11 la première région s'étend sur une surface F1 et la deuxième région s'étend sur une surface F2, où $F1 \leq F2$, F1 et F2 présentent en particulier un rapport compris dans la plage de 1:1 à 1,5:1 de l'une à l'autre,
9.12 l'électrode négative présente une capacité spécifique K1 dans la plage de 10 à 100 mAh/g, de façon particulièrement préférentielle dans la plage de 20 à 60 mAh/g,
9.13 l'électrode positive présente une capacité spécifique K2 dans la plage de 40 à 310 mAh/g, de préférence dans la plage de 50 à 240 mAh/g, de façon particulièrement préférentielle dans la plage de 60 à 200 mAh/g,
9.14 la capacité de l'électrode négative $K_n$ par rapport à la capacité de l'électrode positive $K_p$ présente un rapport X compris dans la plage de 1:1 à 2:1, de façon particulièrement préférentielle compris dans la plage de 1:1 à 1,1:1.

10. Cellule selon la revendication 9, **caractérisée par** l'une au moins des caractéristiques supplémentaires suivantes :
10.1 l'électrode positive comporte, en tant qu'agent d'amélioration de la conductivité, au moins un matériau issu du groupe comprenant le nickel, le cobalt, l'oxyde de cobalt, le carbonate de cobalt, l'hydroxyde de cobalt, le graphite et le noir de carbone, en particulier dans une proportion de 0,1 à 25% en poids.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016005529 A1
- WO 2016020136 A2
- EP 1011163 A1
- EP 1391947 A1
- WO 2010089152 A1